(19) Europäisches Patentamt
European Patent Office
Office européen des brevets

(11) EP 0 841 348 B1

(12) EUROPEAN PATENT SPECIFICATION

(45) Date of publication and mention of the grant of the patent:
**02.07.2003 Bulletin 2003/27**

(51) Int Cl.[7]: **C08F 4/646**, C08F 4/654, C08F 10/06, C08F 297/08, C07F 7/02, C07F 7/18

(21) Application number: **97402610.6**

(22) Date of filing: **03.11.1997**

(54) **Process for polymerization of alpha-olefin, a poly-alpha-olefin prepared thereby, and anaminosilane compound usable as the constituent of catalyst for the process**

Verfahren zur Polymerisation von Olefinen, nach diesem Verfahren hergestellte Poly-Alpha-Olefine und für dieses Verfahren als Katalysatorkomponente verwendbare Aminosilan-Verbindungen

Procédé pour la polymérisation d'une oléfine, poly-alpha-oléfine préparée à l'aide de celui-ci et composé aminosilane utilisable en tant que constituant du catalyseur pour ce procédé

(84) Designated Contracting States:
**DE FR GB IT**

(30) Priority: **06.11.1996 JP 29423196**
**02.12.1996 JP 32181596**
**09.01.1997 JP 3252997**

(43) Date of publication of application:
**13.05.1998 Bulletin 1998/20**

(73) Proprietor: **MITSUI CHEMICALS, INC.**
**Tokyo (JP)**

(72) Inventors:
- **Ikai, Shigeru**
  **Ichihara-city, Chiba-prefecture, 299-01 (JP)**
- **Ikeuchi, Hiroyuki**
  **Ichihara-city, Chiba-prefecture, 299-01 (JP)**
- **Satoh, Hiroshi**
  **Ichihara-city, Chiba-prefecture, 290 (JP)**
- **Inoue, Tokuji**
  **Ichihara-city, Chiba-prefecture, 290-02 (JP)**
- **Sano, Hideo**
  **Ichihara-city, Chiba-prefecture, 290 (JP)**

(74) Representative: **Peuscet, Jacques et al**
**SCP Cabinet Peuscet et Autres,**
**78, avenue Raymond Poincaré**
**75116 Paris (FR)**

(56) References cited:
**EP-A- 0 410 443** **EP-A- 0 564 004**

- **CHEMICAL ABSTRACTS, vol. 1996, Columbus, Ohio, US; abstract no. 485735, IGAI, SHIGERU ET AL: "High-activity and stereoregular catalysts for polymerization of.alpha.-olefins" XP002054893 & JP 08 120 021 A (UBE INDUSTRIES, JAPAN)**
- **PATENT ABSTRACTS OF JAPAN vol. 096, no. 009, 30 September 1996 & JP 08 120021 A (UBE IND LTD), 14 May 1996**
- **PATENT ABSTRACTS OF JAPAN vol. 095, no. 001, 28 February 1995 & JP 06 298830 A (TONEN CORP), 25 October 1994**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 841 348 B1

Printed by Jouve, 75001 PARIS (FR)

## Description

## BACKGROUND OF THE INVENTION

Field of the Invention

The present invention is directed to a process for preparing a homopolymer of α-olefin or a copolymer of α-olefin with other α-olefins, having high activity and, high stereoregularity together with wide molecular weight distribution, by using a novel aminosilane compound having the specific molecular structure as one of the constituents in a novel catalyst; the invention also relates to the α-olefin polymers (including homopolymers and copolymers) prepared by said process and the novel aminosilane compound as the constituent of catalyst used for said process.

Related Art

In recent years, in JP-A-57-63310, JP-A-58-83016, JP-A-59-58010, JP-A-60-44507 and others, there have been proposed for polymerization of α-olefin, a number of highly active carrier-supported type catalyst systems comprising solid constituents containning indispensably magnesium, titanium, a halogen element and an electron donor, an organometal compound of a metal of I-III groups in Periodic Table, and an electron donor. Further, in JP-A-62-11705, JP-A-63-259807, JP-A-2-84404, JP-A-4-202505 and JP-A-4-370103, there have been disclosed other polymerization catalysts characterized by containig a specific organosilicon compound as an electron donor.

However, propylene polymers prepared by using a carrier-supported type catalyst system, containing said organosilicon compound are generally having a narrow molecular weight distribution, and a low viscoelesticity when said polymers are melted. For those reasons such polymers often show defects in the molding properties as well as external appearances of the molded articles, depending upon the applications thereof. In order to improve these defects, there have been proposed some methods in JP-A-63-245408, JP-A-2-232207 and JP-A-4-370103, to spread the molecular weight distribution of polymer by polymerizing propylene in plural numbers of polymerization vessels, or by multiple-stage polymerization.

However, such methods require complicated operations, and the production speed should be inevitably lowered, thus, those methods are not industrially preferable due to the problems inclusive of production cost. Furthermore, in case of preparing a propylene polymer having a low molecular weight and a broad molecular weight distribution by using plural numbers of polymerization vessels, a polymer having a low molecular weight should be prepared by use of an excessive amount of a chain transfer agent, for example hydrogen gas, in one of the polymerization vessels, resulting in higher polymerization pressure. Since the polymerization temperature should be lowered in case of a polymerization vessel which inevitably has a limitative pressure resistance, such method may cause adverse effects to the production speed.

Additionally, in JP-A-8-120021, there is disclosed a process for polymerization of an α-olefin by using, as the constituent of catalyst, an alkyl cyclic aminosilane compound represented by the general formula $R^1Si(OR^2)_2R^3$ (wherein $R^1$ is an alkyl group, and $R^3$ is a cyclic amino group). However, only compounds whose $R^1$ is methyl group are disclosed as the illustrative compounds of the alkyl cyclic aminosilane compounds. Moreover, it is quite silent as to the molecular weight distribution of the propylene polymers thus prepared by using those compounds as the constituent of catalyst.

Further, in JP-A-8-143621, there is disclosed a process for polymerization of an α-olefin by using a bis cyclic aminosilane compound having two cyclic amino groups on the silicon atom specifically diclosed therein. Specifically disclosed this cyclic compound is bis aminosilane compound having two single ring piperidino groups as cyclic amino groups. Similar to the above, there is no concrete description as to the molecular weight distribution of the propylene polymers prepared by use of said compounds as the constituent of catalyst.

Further, in EP-A-410443, there is disclosed bis (4-methylpiperidyl) dimethoxysilane usable for a process for polymerizing an α-olefin. However, there is no concrete description as to the molecular weight distribution of a poly-α-olefin obtainable therefrom, either.

Further, in JP-A-7-90012 and JP-A-7-97411, there are disclosed processes for polymerization of an α-olefin by use of a silane compound having the substituent of nitrogen atom-containing heterocyclic group, wherein any one of carbon atoms in the heterocyclic structure is bonded directly to the silicon atom. However, there are no concrete description relating to the molecular weight distribution of the polymers prepared by using said compound.

On the other hand, it is proposed that a propylene polymer having broad molecular weight distribution and high crystallizability can be obtained by means of melt-mixing in the predetermined ratio, a propylene polymer having low molecular weight and high crystallizability with a propylene polymer having high molecular weight and high crystallizability; each one of those propylene polymers as the starting materials having been prepared by conventional processes before the melt-mixing. In case of preparing a propylene polymer having relatively lower molecular weight

and broad distribution of molecular weight, it is practically very difficult to run the melt-mixing operation of a propylene polymer of low molecular weight with a propylene polymer of high molecular weight, and it may cause the formation of gels in thus obtained polymers as another problem.

## SUMMARY OF THE INVENTION

An object of the present invention is to provide an α-olefin polymer having high steroregularity and broad molecular weight distribution while keeping high melting point, also to provide a novel aminosilane compound which is useful as the constituent of catalyst for preparation of said α-olefin polymer.

The first aspect of the present invention relates to a process for polymerization of α-olefin in the presence of a catalyst consisting of the following constituents (A), (B) and (C):

(A) is a solid constituent containing magnesium, titanium, a halogen element and an electron donor indispensably,
(B) is an organoaluminum compound, and
(C) is an aminosilane compound represented by the general formula (1) which will be shown later on.

The process of the present invention provides an α-olefin polymer particularly a propylene polymer having relatively lower molecular weight, high stereoregularity and high melting point, together with broad molecular weight distribution.

The second aspect of the present invention is directed to a novel aminosilane compound which is useful as constituent of the catalyst having high activity of polymerization used for preparing a homopolymer of an α-olefin or a copolymer of an α-olefin with other α-olefins, each of these polymers having high stereoregularity and broad molecular weight distribution.

### Brief Explanation of the Drawings

Fig. 1 shows gas permeation chromatography (hereinafter referred to as GPC) chart of the molecular weight distributions of polypropylenes obtained in Preparative Example 1 and Comparative Example 1.

Fig. 2 shows GPC chart of the molecular weight distributions of polypropylenes obtained in Preparative Example 26 and Comparative Example 11.

### Detailed Description of Preferred Embodiments

The first aspect of the present invention is directed to a process for polymerization of an α-olefin in the presence of a catalyst consisting the following constituents (A), (B) and (C):

(A) is a solid constituent containing magnesium, titanium, a halogen element and an electron donor indispensably,
(B) is an organoaluminum compound, and
(C) is an aminosilane compound represented by the following general formula (1):

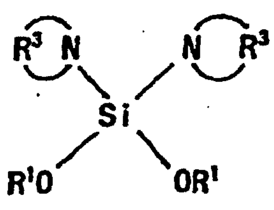

(1).

(wherein $R^1$ represents a hydrocarbyl group having 1 to 8 carbon atoms; and

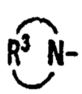

represents a polycyclic amino group wherein the number of carbon atom is 7 to 40, and the carbon atoms form the cyclic skeleton by bonding to the nitrogen atom).

In the present invention, a solid constituent of the catalyst, containing magnesium, titanium, a halogen element and an electron donor indispensably, is used as the constituent (A). Since there is no particular restriction as to the process for preparation of the solid constituent of the catalyst, it can be prepared by using methods for example those proposed in JP-A-54-94590, JP-A-56-55405, JP-A-56-45909, JP-A-56-163102, JP-A-57-63310, JP-A-57-115408, JP-A-58-83006, JP-A-58-83016, JP-A-58-138707, JP-A-59-149905, JP-A-60-23404, JP-A-60-32805, JP-A-61-18300, JP-A-61-55104, JP-A-2-77413, JP-A-2-117905 and others.

As to the representative method for preparing the constituent (A), there can be exemplified (i) a method which comprises co-grinding a magnesium compound (e.g., magnesium chloride), an electron donor and a titanium halide compound (e.g., titanium tetrachloride), or (ii) a method which comprises dissolving a magnesium compound and an electron donor in a solvent and adding a titanium halide compound to the resulting solution to precipitate a solid catalyst.

In order to achieve the object of the present invention, those solid catalysts disclosed in JP-A-60-152511, JP-A-61-31402 and JP-A-62-81405 are particularly preferable as to constituent (A). According to methods as disclosed in those prior art literatures, an aluminum halide compound is reacted with a silicon compound, then the reaction product is further reacted with a Grignard compound so as to precipitate a solid substance. The aluminum compound usable in the above reaction is preferably an anhydrous aluminum halide. However, the use of a completely anhydrous aluminum halide is virtually difficult due to the hygroscopicity thereof, and it may be possible to use an aluminum halide containing a small amount of water. Specific examples of the aluminum halide include aluminum trichloride, aluminum tribromide, aluminum triiodide. Particularly, aluminum trichloride is preferred.

Specific examples of the silicon compounds usable in the above reaction include tetramethoxysilane, tetraethoxysilane, tetrabutoxysilane, methyltriethoxysilane, ethyltributoxysilane, phenyltrimethoxysilane, phenyltri-butoxysilane, dimethyldiethoxysilane, diphenyldimethoxy-silane, methylphenyldimethoxysilane, diphenyldiethoxysilane, trimethylmonoethoxysilane and trimethylmonobutoxysilane.

Particularly, methyldimethoxysilane, tetraethoxysilane, methyltriethoxysilane, phenyltrimethoxysilane and dimethyldiethoxysilane are preferred.

In the reaction of the aluminum halide with the silicon compound, the ratio of used amount of these compounds is generally 0.4 to 1.5, preferably 0.7 to 1.3 in terms of atomic ratio (Al/Si). In the reaction, it is preferable to use an inert solvent such as hexane, toluene or the like. The reaction temperature is generally 10 to 100° C, preferably 20 to 80° C, and the reaction time is generally 0.2 to 5 hours, preferably 0.5 to 3 hours.

Specific examples of the magnesium compounds usable in the above reaction include ethylmagnesium chloride, propylmagnesium chloride, butylmagnesium chloride, hexyl-magnesium chloride, octylmagnesium chloride, ethylmagnesium bromide, propylmagnesium bromide, butylmagnesium bromide and ethylmagnesium iodide. As to the solvent for the magnesium compound, there can be used, for example, aliphatic ethers such as diethyl ether, dibutyl ether, diisopropyl ether, diisoamyl ether and the like; aliphatic cyclic ethers such as tetrahydrofuran and the like.

The used amount of a magnesium compound is generally in the range of 0.5 to 3, preferably 1.5 to 2.3 in terms of atomic ratio (Mg/Al) of a magnesium compound to an aluminum halide which are used for preparation of the reaction product of an aluminum halide with a silicon compound. The reaction temperature is generally from -50° C to 100° C, preferably -20° C to 50° C, and the reaction time is generally in the range of 0. 2 to 5 hours, preferably 0.5 to 3 hours.

A white solid substace obtained by the reaction of an aluminum halide with a silicon compound and subsequent reaction with a Grignard compound is subjected to contact treatment with an electron donor and a titanium halide compound. The contact treatment can be conducted by conventional methods which are well-known in the art, for example, (i) a method which comprises treating the solid substance with a titanium halide compound, then with an electron donor, and again treating with the titanium halide compound; or (ii) a method which comprises treating the solid substance with a titanium halide compound in the coexistence of an electron donor, and again treating with the titanium halide compound.

The contact treatment is conducted for example, by dispersing the above-mentioned solid substance in an inert solvent and adding thereto an electron donor and/or a titanium halide compound to dissolve said electron donor and/or a titanium halide compound therein, or by dispersing the solid substance in an electron donor or/and a liquid-state titanium halide compound by without using an inert solvent. In this case, the contact treatment of the solid substance with an electron donor and/or a titanium halide compound can be conducted under stirring, generally at temperature of 50 to 150° C, for 0.2 to 5 hours; there is no particular restriction as to the contact time though. This contact treatment may be repeated in several times.

Specific examples of the titanium halide compounds usable in the contact treatment include tetrachlorotitanium, tetrabromotitanium, trichloromonobutoxytitanium, tribromomonoethoxytitanium, trichloromonoisopropoxy titanium, dichlorodiethoxytitanium, dichlorodibutoxytitanium, monochlorotriethoxytitanium and monochlorotributoxytitanium. Particularly, tetrachlorotitanium and trichloromonobutoxytitanium are preferred

An electron donor usable for in the contact treatment is a compound of Lewis base, preferably an aromatic diester, particularly a diester of orthophthalic acid is preferred. Specific examples of the diesters of orthophthalic acid

includ diethyl orthophthalate, di-n-butyl orthophthalate, diisobutyl orthophthalate, dipentyl orthophthalate, di-n-hexyl orthophthalate, di-2-ethylhexyl orthophthalate, di-n-heptyl orthophthalate, di-n-octyl orthophthalate and the like. Further, a compound having two or more of ether group, such as those disclosed in JP-A-3-706, JP-A-3-62805, JP-A-4-270105 and JP-A-6-25332 may be used preferably as the electron donor.

After the contact treatment, the resulting solid substance is generally separated from the treatment mixture and thoroughly washed with an inert solvent, then the thus obtained solid substance can be used as the solid constituent (A) of the catalyst for polymerization of α-olefin.

Organoaluminum compounds as to the constituent (B) of the catalyst usable in the present invention can be an alkylaluminum, an alkylaluminum halide or the like. Among those compounds, an alkylaluminum is preferred, a trialkylaluminum is particularly preferred Specific examples of the trialkylaluminum include trimethylaluminum, triethylaluminum, tri-n-propylaluminum, triisobutylaluminum, trihexylaluminum and trioctylaluminum. These organoaluminum compounds can be used singly or in admixture thereof. Also, polyaluminoxane obtained by the reaction of alkylaluminium with water can be used as well.

The amount of an organoaluminum compound as to the constituent (B) of the catalyst for polymerization of an α-olefin is 0.1 to 500, preferably 0.5 to 150 in terms of atomic ratio (Al/Ti) of aluminum atom of the organoaluminum compound to titanium atom in the solid constituent (A) of the catalyst.

Constituent (C) of the catalyst used in the present invention is an aminosilane compound represented by the following general formula (1) :

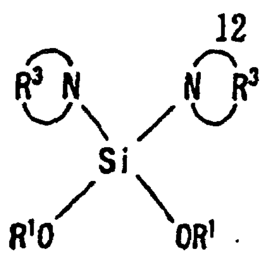 (1),

(wherein $R^1$ represents a hydrocarbyl group having 1 to 8 carbon atoms; and

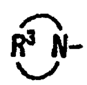

represents a polycyclic amino group wherein the number of carbon atoms is 7 to 40, and the carbon atoms form the cyclic skeleton by bonding directly to the nitrogen atom).

In the above general formulas, $R^1$ represents a hydrocarbyl group having 1 to 8 carbon atoms, and an unsaturated or saturated aliphatic hydrocarbon having 1 to 8 carbon atoms can be exemplified. Specific examples of the hydrocarbyl groups include, methyl group, ethyl group, n-propyl group, iso-propyl group, n-butyl group, iso-butyl group, tert-butyl group, sec-butyl group, n-pentyl group, iso-pentyl group, iso-pentyl group, cyclopentyl group, n-hexyl group, cyclohexyl group and the like. Among these, methyl group is specifically preferred.

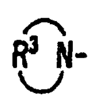

is a polycyclic amino group having carbon atoms of 7 to 40, preferably 7 to 20, wherein the carbon atoms form a cyclic skeleton by bonding directly to the nitrogen atom. Said polycyclic amino group may be a saturated polycyclic amino group, or may be a partially or entirely unsaturated polycyclic amino group. The nitrogen atom in said polycyclic amino group is also bonded directly to the silicon atom of the aminosilane compound. Thus, the polycyclic amino group represented by the formula

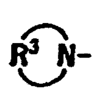

can be defined as a substituent formed by chemically bonding the N atom in the ring to Si atom by removing the hydrogen atom from the secondary amine

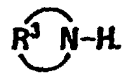

In the general formula (1), each one of two

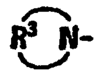

groups may be the same or different.

Specific examples of polycyclic secondary amine compounds,

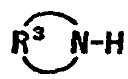

include amine compounds as mentioned by the following chemical structural formulas: perhydroindole, perhydroisoindole, perhydroquinoline, perhydrocarbazole, perhydroacrydine, perhydrophenanthridine, perhydrobenzo(g)quinoline, perhydrobenzo(h)quinoline, perhydrobenzo(f)quinoline, perhydrobenzo(g)isoquinoline, perhydrobenzo(h)isoquinoline, perhydrobenzo(f)isoquinoline, perhydroacequinoline, perhydroaceisoquinoline, perhydroiminostilbene and the like. In the above-mentioned amine compounds, there can be exemplified other amine ompounds, wherein some of the hydrogen atoms other than the nitrogen atom are substituted with alkyl group, phenyl group or cycloalkyl group:

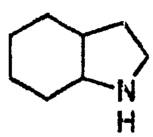

Perhydroindole,

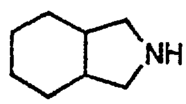

Perhydroisoindole,

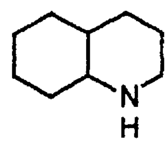

Perhydroquinoline,

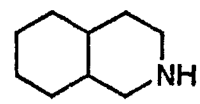

Perhydroisoquinoline,

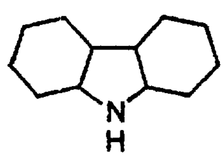

Perhydrocarbazole,

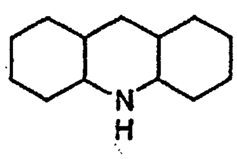

Perhydroacridine,

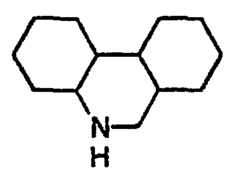

Perhydrophenanthridine,

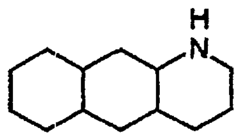
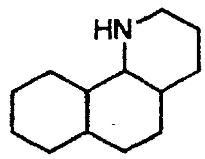
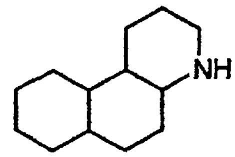

Perhydrobenzo(g)quinoline, Perhydrobenzo(h)quinoline, Perhydrobenzo(f)quinoline,

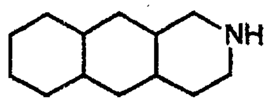
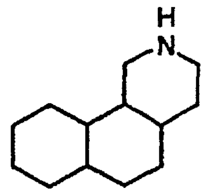
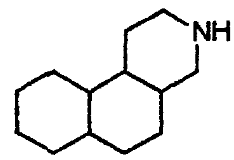

Perhydrobenzo(g)-isoquinoline, Perhydrobenzo(h)-isoquinoline, Perhydrobenzo(f)-isoquinoline,

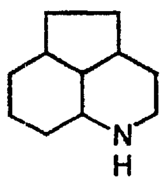
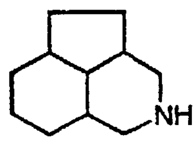
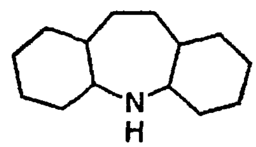

Perhydroacequinoline, Perhydroaceisoquinoline, and Perhydroiminostilbene.

Further, the polycyclic secondary amine compounds represented by the formula $R^3$ N-H, such as 1, 2, 3, 4-tetrahydroquinoline, 1, 2, 3, 4-tetrahydroisoquinoline as mentioned in the following chemical structural formulas, wherein a part of the cyclic skeleton is unsaturated, and other amine compounds wherein part of the hydrogen atoms other than the one bonded to the nitrogen atom in the cyclic skeleton are substituted with alkyl group, phenyl group or cycloalkyl group can be exemplified.

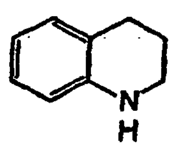
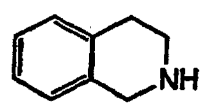

1, 2, 3, 4-Tetrahydroquinoline 1, 2, 3, 4-Tetrahydroisoquinoline

Specifically preferable examples of the polycyclic secondary amine compounds represented by the general formula

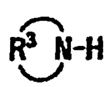

include, perhydroquinoline, perhydroisoquinoline, 1, 2, 3, 4-tetrahydroquinoline, 1, 2, 3, 4-tetrahydroisoquinoline and

their derivatives.

As to the aminosilane compounds represented by the general formula (1), there can be exemplified a perhydroquinolino compound represented by the general formula (3), a perhydroisoquinolino compound represented by the general formula (4). (perhydroquinolino) (perhydroisoquinolino) compound represented by the general formula (5), 1, 2, 3, 4-tetrahydroquinolino compound represented by the general formula (6), 1, 2, 3, 4-tetrahydroisoquinolino compound represented by the general formula (7), (1, 2, 3, 4-tetrahydro-quinolino)(1, 2, 3, 4, -tetrahydroisoquinoli no) compound represented by the general formula (8) and the like:

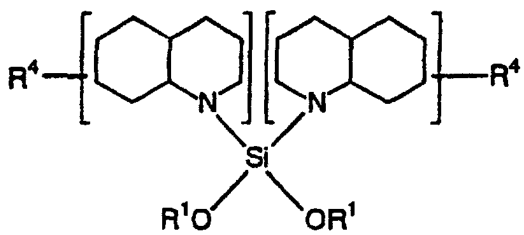

(3) ,

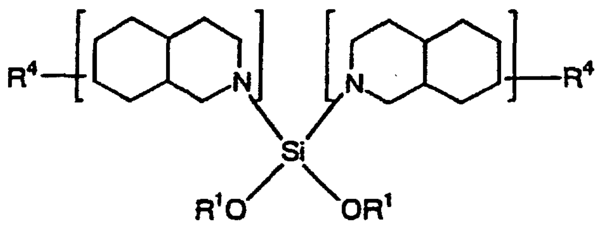

(4) ,

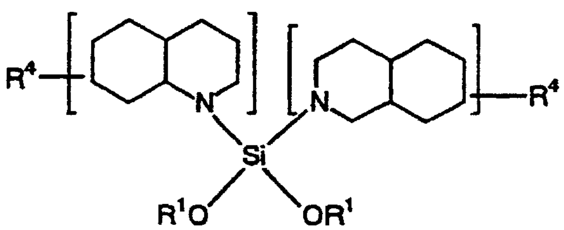

(5) ,

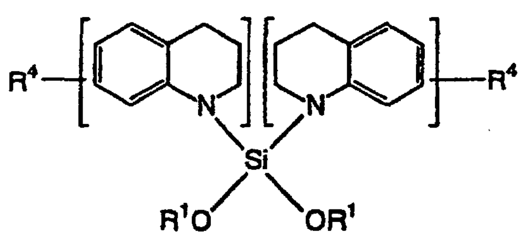

(6) ,

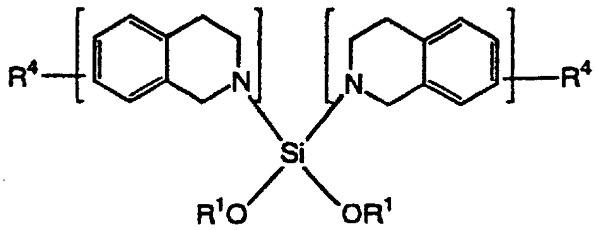

(7) ,

and

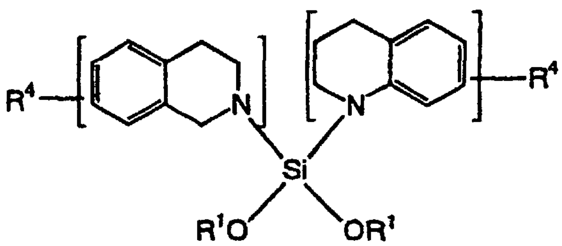

(8) .

(wherein $R^4$ represents a substituted group on the cyclic skeleton of the general formula

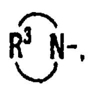,

and is a hydrogen atom or a saturated aliphatic hydrocarbyl group having 1 to 24 carbon atoms or an unsaturated aliphatic hydrocarbyl group having 2 to 24 carbon atoms; preferable examples of $R^4$ include hydrogen atom, methyl group, ethyl group, n-propyl group, iso-propyl group, n-butyl group, iso-butyl group, tert-butyl group, sec-butyl group and the like; further, the number of hydrocarbyl groups substituted on the saturated cyclic structure of

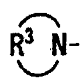

may be 1 or more).

As to the specific example of the compound represented by the general formula (3), bis(perhydroquinolino) dimethoxysilane can be mentioned.

Specific examples of the bis(methyl-substituted-perhydroquinolino)dimethoxysilane compounds include,

bis(2-methylperhydroquinolino)dimethoxysilane,
bis(3-methylperhydroquinolino)dimethoxysilane,
bis(4-methylperhydroquinolino)dimethoxysilane,
bis(5-methylperhydroquinolino)dimethoxysilane,
bis(6-methylperhydroquinolino)dimethoxysilane,
bis(7-methylperhydroquinolino)dimethoxysilan,
bis(8-methylperhydroquinolino)dimethoxysilane,
bis(9-methylperhydroquinolino)dimethoxysilane,
bis(10-methylperhydroquinolino)dimethoxysilane and the like.

Specific examples of bis(dimethyl-substituted-perhydroquinolino)dimethoxysilane compounds include,

bis(2, 3-dimethylperhydroquinolino)dimethoxysilane,
bis(2, 4-dimethylperhydroquinolino)dimethoxysilane,

bis(2, 5-dimethylperhydroquinolino)dimethoxysilane,
bis(2, 6-dimethylperhydroquinolino)dimethoxysilane,
bis(2, 7-dimethylperhydroquinolino)dimethoxysilane,
bis(2, 8-dimethylperhydroquinolino)dimethoxysilane,
bis(2, 9-dimethylperhydroquinolino)dimethoxysilane,
bis(2, 10-dimethylperhydroquinolino)dimethoxysilane,
bis(3, 4-dimethylperhydroquinolino)dimethoxysilane,
bis(3, 5-dimethylperhydroquinolino)dimethoxysilane,
bis(3, 6-dimethylperhydroquinolino)dimethoxysilane,
bis(3, 7-dimethylperhydroquinolino)dimethoxysilane,
bis(3, 8-dimethylperhydroquinolino)dimethoxysilane.
bis(3, 9-dimethylperhydroquinolino)dimethoxysilane,
bis(3, 10-dimethylperhydroquinolino)dimethoxysilane,
bis(4, 5-dimethylperhydroquinolino)dimethoxysilane,
bis(4, 6-dimethylperhydroquinolino)dimethoxysilane,
bis(4, 7-dimethylperhydroquinolino)dimethoxysilane,
bis(4, 8-dimethylperhydroquinolino)dimethoxysilane,
bis(4, 9-dimethylperhydroquinolino)dimethoxysilane,
bis(4, 10-dimethylperhydroquinolino)dimethoxysilane,
bis(5, 6-dimethylperhydroquinolino)dimethoxysilane,
bis(5, 7-dimethylperhydroquinolino)dimethoxysilane,
bis(5, 8 -dimethylperhydroquinolino)dimethoxysilane,
bis(5, 9-dimethylperhydroquinolino)dimethoxysilane,
bis(5, 10-dimethylperhydroquinolino)dimethoxysilane,
bis(6, 7-dimethylperhydroquinolino)dimethoxysilane,
bis(6, 8-dimethylperhydroquinolino)dimethoxysilane,
bis(6, 9-dimethylperhydroquinolino)dimethoxysilane,
bis(6, 10-dimethylperhydroquinolino)dimethoxysilane,
bis(6, 10-dimethylperhydroquinolino)dimethoxysilane,
bis(7, 9-dimethylperhydroquinolino)dimethoxysilane,
bis(7, 10-dimethylperhydroquinolino)dimethoxysilane,
bis(8, 9-dimethylperhydroquinolino)dimethoxysilane,
bis(8, 10-dimethylperhydroquinolino)dimethoxysilane,
bis(9, 10-dimethylperhydroquinolino)dimethoxysilane and the like.

Specific examples of

bis(trimethyl-substituted-perhydroquinolino)dimethoxysilane compounds include, bis(2, 3, 4-trimethylperhydroquinolino)dimethoxysilane,
bis(3, 4, 5-trimethylperhydroquinolino)dimethoxysilane,
bis(4, 5, 6-trimethylperhydroquinolino)dimethoxysilane,
bis(5, 6, 7-trimethylperhydroquinol ino)dimethoxysi lane,
bis(6, 7, 8-trimethylperhydroquinolino)dimethoxysilane,
bis(7, 8, 9-trimethylperhydroquinolino)dimethoxysilane,
bis(8, 9, 10-trimethylperhydroquinolino)dimethoxysilane and the like.

Further, there can be exemplified compounds of (perhydroquinolino)(monomethylperhydroquinolino) dimethoxysilane :

(perhydroquinolino)(2-methylperhydroquinolino)dimethoxysilane.
(perhydroquinolino)(3-methylperhydroquinolino)dimethoxysilane,
(perhydroquinolino)(4-methylperhydroquinolino)dimethoxysilane,
(perhydroquinolino)(5-methylperhydroquinolino)dimethoxysilane,
(perhydroquinolino)(6-methylperhydroquinolino)dimethoxysilane,
(perhydroquinolino)(7-methylperhydroquinolino)dimethoxysilane,
(perhydroquinolino)(8-methylperhydroquinolino)dimethoxysilane,
(perhydroquinolino)(9-methylperhydroquinolino)dimethoxysilane,
(perhydroquinolino)(10-methylperhydroquinolino)dimethoxysilane

and the like.

Among these compounds, bis(perhydroquinolino)-dimethoxysilane is preferred

Examples of the compound represented by the general formula (4), there can be mentioned bis(perhydroisoquinolino)dimethoxysilane and the like.

Examples of the compounds of bis(methyl-substituted-perhydroisoquinolino)dimethoxysilanes include,

bis(1-methylperhydroisoquinolino)dimethoxysilane,
bis(3-methylperhydroisoquinolino)dimethoxysilane,
bis(4-methylperhydroisoquinolino)dimethoxysilane,
bis(5-methylperhydroisoquinolino)dimethoxysilane,
bis(6-methylperhydroisoquinolino)dimethoxysilane,
bis(7-methylperhydroisoquinolino)dimethoxysilane,
bis(8-methylperhydroisoquinolino)dimethoxysilane,
bis(9-methylperhydroisoquinolino)dimethoxysilane,
bis(10-methylperhydroisoquinolino)dimethoxysilane and the like.

Examples of the compounds of bis(dimethyl-substituted-perhydroisoquinolino)dimethoxysilane include,

bis(1, 3-dimethylperhydroisoquinolino)dimethoxysilane,
bis(1, 4-dimethylperhydroisoquinolino)dimethoxysilane,
bis(1, 5-dimethylperhydroisoquinolino)dimethoxysilane,
bis(1, 6-dimethylperhydroisoquinolino)dimethoxysilane,
bis(1, 7-dimethylperhydroisoquinolino)dimethoxysilane,
bis(1, 8-dimethylperhydroisoquinolino)dimethoxysilane,
bis(1, 9-dimethylperhydroisoquinolino)dimethoxysilane.
bis(1, 10-dimethylperhydroisoquinolino)dimethoxysilane,
bis(3, 4-dimethylperhydroisoquinolino)dimethoxysilane,
bis(3, 5-dimethylperhydroisoquinolino)dimethoxysilane,
bis(3, 6-dimethylperhydroisoquinolino)dimethoxysilane,
bis(3, 7-dimethylperhydroisoquinolino)dimethoxysilane,
bis(3, 8-dimethylperhydroisoquinolino)dimethoxysilane,
bis(3, 9-dimethylperhydroisoquinolino)dimethoxysilane,
bis(3, 10-dimethylperhydroisoquinolino)dimethoxysilane,
bis(4, 5-dimethylperhydroisoquinolino)dimethoxysilane,
bis(4, 6-dimethylperhydroisoquinolino)dimethoxysilane,
bis(4, 7-dimethylperhydroisoquinolino)dimethoxysilane,
bis(4, 8-dimethylperhydroisoquinolino)dimethoxysilane,
bis(4, 9-dimethylperhydroisoquinolino)dimethoxysilane,
bis(4, 10-dimethylperhydroisoquinolino)dimethoxysilane,
bis(5, 6-dimethylperhydroisoquinolino)dimethoxysilane,
bis(5, 7-dimethylperhydroisoquinolino)dimethoxysilane,
bis(5, 8-dimethylperhydroisoquinolino)dimethoxysilane,
bis(5, 9-dimethylperhydroisoquinolino)dimethoxysilane,
bis(5, 10-dimethylperhydroisoquinolino)dimethoxysilane,
bis(6, 7-dimethylperhydroisoquinolino)dimethoxysilane,
bis(6, 8-dimethylperhydroisoquinolino)dimethoxysilane,
bis(6, 9-dimethylperhydroisoquinolino)dimethoxysilane,
bis(6, 10-dimethylperhydroisoquinolino)dimethoxysilane,
bis(7, 8-dimethylperhydroisoquinolino)dimethoxysilane,
bis(7, 9-dimethylperhydroisoquinolino)dimethoxysilane,
bis(7, 10-dimethylperhydroisoquinolino)dimethoxysilane,
bis(8, 9-dimethylperhydroisoquinolino)dimethoxysilane,
bis(8, 10-dimethylperhydroisoquinolino)dimethoxysilane,
bis(9, 10-dimethylperhydroisoquinolino)dimethoxysilane and the like.

Examples of the compounds of bis(trimethyl-substituted-perhydroisoquinolino)dimethoxysilane include,

bis(1, 3, 4-trimethylperhydroisoquinolino)dimethoxysilane,

bis(3, 4, 5-trimethylperhydroisoquinolino)dimethoxysilane,
bis(4, 5, 6-trimethylperhydroisoquinolino)dimethoxysilane,
bis(5, 6, 7-trimethylperhydroisoquinolino)dimethoxysilane,
bis(6, 7, 8-trimethylperhydroisoquinolino)dimethoxysilane,
bis(7, 8, 9-trimethylperhydroisoquinolino)dimethoxysilane.
bis(8, 9, 10-trimethylperhydroisoquinolino)dimethoxysilane

and the like.

Further, examples of the compounds of (perhydroisoquinolino)(monomethyl-substituted perhydroisoquinolino)-dimethoxysilane include, (perhydroisoquinolino)(2-methylperhydroisoquinolino)dimethoxysilane, (perhydroisoquinolino)-(3-methylperhydroisoquinolino)dimethoxysilane, (perhydroisoquinolino)(4-methylperhydroisoquinolino) dimethoxysilane, (perhydroisoquinolino)(5-methylperhydroisoquinolino)-dimethoxysilane, (perhydroisoquinolino) (6-methylperhydroisoquinolino)dimethoxysilane, (perhydroisoquinolino)(7-methylperhydroisoquinolino)dimethoxysilane, (perhydroisoquinolino)-(8-methylperhydroisoquinolino)dimethoxysilane, (perhydroisoquinolino)(9-methylperhydroisoquinolino)dimethoxysilane, (perhydroisoquinolino)(10-methylperhydroisoquinolino)-dimethoxysilane and the like.

Among these compounds, bis(perhydroisoquinolino)-dimethoxysilane is preferable.

Examples of the compounds represented by the general formula (5) include, (perhydroquinolino)(perhydroisoquinolino)-dimethoxysilane, (perhydroquinolino)(1-methylperhydroisoquinolino)dimethoxysilane, (perhydroquinolino)(3-methylperhydroisoquinolino)dimethoxysilane, (perhydroquinolino)-(4-methylperhydroisoquinolino)dimethoxysilane, (perhydroquinolino)(5-methylperhydroisoquinolino)dimethoxysilane, (perhydroquinolino)(6-methylperhydroisoquinolino)dimethoxysilane, (perhydroquinolino)(7-methylperhydroisoquinolino)-dimethoxysilane, (perhydroquinolino)(8-methylperhydroisoquinolino)dimethoxysilane, (perhydroquinolino)(9-methylperhydroisoquinolino)dimethoxysilane, (perhydroquinolino)-(10-methylperhydroisoquinolino)dimethoxysilane, (2-methylperhydroquinolino)(perhydroisoquinolino)dinethoxysilane, (3-methylperhydroquinolino)(perhydroisoquinolino)dimethoxysilane, (4-methylperhydroquinolino)(perhydroisoquinolino)-dimethoxysilane, (5-methylperhydroquinolino)(perhydroisoquinolino)dimethoxysilane, (6-methylperhydroquinolino)-(perhydroisoquinolino)dimethoxysilane, (7-methylperhydroquinolino) (perhydroisoquinolino)dimethoxysilane, (8-methylperhydroquinolino)(perhydroisoquinolino)dimethoxysilane, (9-methylperhydroquinolino)(perhydroisoquinolino)dimethoxysilane, (10-methylperhydroquinolino)(perhydroisoquinolino) dimethoxysilane, (2-methylperhydroquinolino)(1-methylperhydroisoquinolino)dimethoxysilane, (3-methylperhydroquinolino)(3-methylperhydroisoquinolino)dimethoxysilane, (4-methylperhydroquinolino)(4-methylperhydroisoquinolino) dimethoxysilane, (5-methylperhydroquinolino)-(5-methylperhydroisoquinolino)-dimethoxysilane, (6-methylperhydroquinolino)(6-methylperhydroisoquinolino)dimethoxysilane, (7-methylperhydroquinolino)(7-methylperhydroisoquinolino)dimethoxysilane, (8-methylperhydroquinolino)(8-methylperhydroisoquinolino)dimethoxysilane, (9-methylperhydroquinolino)(9-methylperhydroisoquinolino)-dimethoxysilane, (10-methylperhydroquinolino)(10-methylperhydroisoquinolino)dimethoxysilane and the like.

Among these compounds, (perhydroquinolino)(perhydroisoquinolino)dimethoxysilane is preferable.

Examples of the compounds represented by the general formula (6) include, bis(1,2,3,4-tetrahydroquinolino)-dimethoxysilane and the like.

Examples of the compounds of bis(methyl-substituted-1,2,3,4-tetrahydroquinolino)dimethoxysilane include,

bis(2-methyl-1, 2, 3, 4-tetrahydroquinolino)dimethoxysilane,
bis(3-methyl-1, 2, 3, 4-tetrahydroquinolino)dimethoxysilane,
bis(4-methyl-1, 2, 3, 4-tetrahydroquinolino)dimethoxysilane,
bis(6-methyl-1, 2, 3, 4-tetrahydroquinolino)dimethoxysilane,
bis(7-methyl-1, 2, 3, 4-tetrahydroquinolino)dimethoxysilane,
bis(8-methyl-1, 2, 3, 4-tetrahydroquinolino)dimethoxysilane,
bis(9-methyl-1, 2, 3, 4-tetrahydroquinolino)dimethoxysilane and the like.

Examples of the compounds of bis(dimethyl-substituted-1,2,3,4-tetrahydroquinolino)dimethoxysilane include,

bis(2, 3-dimethyl-1, 2, 3, 4-tetrahydroquinolino)dimethoxysilane,
bis(2, 4-dimethyl-1, 2, 3, 4-tetrahydroquinolino)dimethoxysilane,
bis(2, 6-dimethyl-1, 2, 3, 4-tetrahydroquinolino)dimethoxysilane,
bis(2, 7-dimethyl-1, 2, 3, 4-tetrahydroquinolino)dimethoxysilane,
bis(2, 8-dimethyl-1, 2, 3, 4-tetrahydroquinolino)dimethoxysilane,
bis(2, 9-dimethyl-1, 2, 3, 4-tetrahydroquinolino)dimethoxysilane,
bis(3, 4-dimethyl-1, 2, 3, 4-tetrahydroquinolino)dimethoxysilane,

bis(3, 6-dimethyl-1, 2, 3, 4-tetrahydroquinolino)dimethoxysilane,
bis(3, 7-dimethyl-1, 2, 3, 4-tetrahydroquinolino)dimethoxysilane,
bis(3, 8-dimethyl -1, 2, 3, 4-tetrahydroquinolino)dimethoxysilane,
bis(3, 9-dimethyl-1, 2, 3, 4-tetrahydroquinolino)dimethoxysilane,
bis(4, 6-dimethyl-1, 2, 3, 4-tetrahydroquinolino)dimethoxysilane,
bis(4,7-dimethyl-1, 2, 3, 4-tetrahydroquinolino)dimethoxysilane,
bis(4, 8-dimethyl-1, 2, 3, 4-tetrahydroquinolino)dimethoxysilane,
bis(4, 9-dimethyl-1, 2, 3, 4-tetrahydroquinolino)dimethoxysilane,
bis(6, 7-dimethyl-1, 2, 3, 4-tetrahydroquinolino)dimethoxysilane,
bis(6, 8-dimethyl-1, 2, 3, 4-tetrahydroquinolino)dimethoxysilane,
bis(6, 9-dimethyl-1, 2, 3, 4-tetrahydroquinolino)dimethoxysilane,
bis(7, 8-dimethyl-1, 2, 3, 4-tetrahydroquinolino)dimethoxysilane,
bis(7, 9-dimethyl-1, 2, 3, 4-tetrahydroquinolino)dimethoxysilane,
bis(8, 9-dimethyl-1, 2, 3, 4-tetrahydroquinolino)dimethoxysilane and the like.

Examples of the compounds of bis(trimethyl-substituted-1,2,3,4-tetrahydroquinolino)dimethoxysilane include, bis(2, 3, 4-trimethyl-1, 2, 3, 4-tetrahydroquinolino)-dimethoxysilane, bis(2,3,6-trimethyl-1, 2, 3, 4-tetrahydroquinolino) dimethoxysilane, bis(2, 3, 7-trimethyl-1, 2, 3, 4-tetrahydroquinolino)dimethoxysilane, bis(2,3,8-trimethyl-1, 2, 3, 4-tetrahydroquinolino)dimethoxysilane, bis(2, 3, 9-trimethyl-1, 2, 3, 4-tetrahydroquinolino)dimethoxysilane, bis(3, 4, 6-trimethyl-1, 2, 3, 4-tetrahydroquinolino)dimethoxysilane, bis(3, 4, 7-trimethyl-1, 2, 3, 4-tetrahydroquinolino)-dimethoxysilane, bis(3, 4, 8-trimethyl-1, 2, 3,4-tetrahydroquinolino)dimethoxysilane, bis(3, 4, 9, -trimethyl-1,2,3,4-tetrahydroquinolino)dimethoxysilane, bis(4,6,7-trimethyl-1,2,3,4-tetrahydroquinolino)dimethoxysilane, bis(4,6,8-trimethyl-1,2,3,4-tetrahydroquinolino)dimethoxysilane, bis(4, 6, 9-trimethyl-1, 2, 3, 4-tetrahydroquinolino)dimethoxysilane, bis(6, 7, 8-trimethyl-1, 2, 3, 4-tetrahydroquinolino)-dimethoxysilane, bis(6, 7, 9-trimethyl-1, 2, 3, 4-tetrahydroquinolino)dimethoxysilane, bis(7,8,9-trimethyl-1,2,3,4-tetrahydroquinolino)dimethoxysilane and the like.

Examples of the compounds of bis(tetramethyl-substituted-1, 2, 3, 4-tetrahydroquinolino)dimethoxysilane include, bis(2, 3, 4, 6-tetramethyl-1, 2, 3, 4-tetrahydroquinolino)-dimethoxysilane, bis(2, 3, 4, 7-tetramethyl-1, 2, 3, 4-tetrahydroquinolino)dimethoxysilane, bis(2, 3, 4, 8-tetramethyl-1, 2, 3, 4-tetrahydroquinolino)dimethoxysilane, bis (2,3,4,9-tetramethyl-1, 2, 3, 4-tetrahydroquinolino)dimethoxysilane, bis(3, 4, 6, 7-tetramethyl-1, 2, 3, 4-tetrahydroquinolino)dimethoxysilane, bis(3, 4, 6, 8, -tetramethyl-1, 2, 3, 4-tetrahydroquinolino)-dimethoxysilane, bis(3, 4, 6, 9, -tetramethyl-1, 2, 3, 4-tetrahydro-quinolino)dimethoxysilane, bis(4, 6, 7, 8, -tetramethyl-1, 2, 3, 4-tetrahydroquinolino) dimethoxysilane, bis(4, 6, 7, 9, -tetramethyl-1, 2, 3, 4-tetrahydroquinolino)dimethoxysilane, bis(6, 7, 8, 9-tetramethyl-1, 2, 3, 4-tetrahydroquinolino)dimethoxysilane and the like.

Among these compounds, bis(1, 2, 3, 4-tetrahydroquinolino)dimethoxysilane is preferred.

As to the compound represented by the general formula (7) there can be exemplified bis(1, 2, 3, 4-tetrahydroisoquinolino)dimethoxysilane and the like.

Examples of the compound of bis(methyl-substituted-1, 2, 3, 4-tetrahydroisoquinolino)dimethoxysilane include,

bis(1-methyl-1, 2, 3, 4-tetrahydroisoquinolino)dimethoxysilane,
bis(3-methyl-1, 2, 3, 4-tetrahydroisoquinolino)dimethoxysilane,
bis(4-methyl-1, 2, 3, 4-tetrahydroisoquinolino)dimethoxysilane,
bis(6-methyl-1, 2, 3, 4-tetrahydroisoquinolino)dimethoxysilane,
bis(7-methyl-1, 2, 3, 4-tetrahydroisoquinolino)dimethoxysilane,
bis(8-methyl-1, 2, 3, 4-tetrahydroisoquinolino)dimethoxysilane,
bis(9-methyl-1,2,3,4-tetrahydroisoquinolino)dimethoxysilane and the like.

Examples of the compound of bis(dimethyl-substituted-1, 2, 3, 4-tetrahydroisoquinolino)dimethoxysilane include, bis(1,3-dimethyl-1,2,3,4-tetrahydroisoquinolino)dimethoxysilane, bis(1, 4-dimethyl-1, 2, 3, 4-tetrahydroisoquinolino)-dimethoxysilane, bis(1, 6-dimethyl-1, 2, 3, 4-tetrahydroisoquinolino)dimethoxysilane, bis(1, 7-diniethyl-1, 2, 3,4-tetrahydroisoquinolino)dimethoxysilane, bis(1, 8-dimethyl-1, 2, 3,4-tetrahydroisoquinolino)dimethoxysilane, bis(1, 9-dimethyl-1, 2, 3, 4-tetrahydroisoquinolino)dimethoxysilane, bis(3, 4-dimethyl-1, 2, 3, 4-tetrahydroisoquinolino) dimethoxysilane, bis(3, 6-dimethyl-1, 2, 3, 4-tetrahydroisoquinolino)dimethoxysilane, bis(3, 7-dimethyl-1, 2, 3, 4-tetrahydroisoquinolino)-dimethoxysilane, bis(3, 8-dimethyl-1, 2, 3, 4-tetrahydroisoquinolino)dimethoxysilane, bis(3, 9-dimethyl-1, 2, 3, 4-tetrahydroisoquinolino)dimethoxysilane, bis(4,6-dimethyl-1, 2, 3, 4-tetrahydroisoquinolino)dimethoxysilane, bis(4,7-dimethyl-1, 2, 3, 4-tetrahydroisoquinolino)dimethoxysilane, bis(4, 8-dimethyl-1, 2, 3, 4-tetra-hydroisoquinolino)dimethoxysilane, bis(4, 9-dimethyl-1, 2, 3, 4-tetrahydroisoquinolino)-dimethoxysilane, bis(6, 7-dimethyl-1, 2, 3, 4-tetrahydroisoquinolino)dimethoxysilane, bis(6, 8-dimethyl-1, 2, 3, 4-tetrahydroisoquinolino)dimethoxysilane, bis(6, 9-dimethyl-1,2,3,4-tetrahydroisoquinolino)dimethoxysilane, bis(7, 8-dimethyl-1, 2, 3, 4-tetrahydroisoquinolino) dimethoxysilane, bis(7, 9-dimethyl-1, 2, 3, 4-tetrahydroisoquinolino)dimethoxysilane, bis(8, 9-dimethyl-1, 2, 3, 4-tetrahydroisoquinolino)dimethoxysilane and the like.

Examples of the compounds of bis(trimethyl-substituted-1, 2, 3, 4-tetrahydroisoquinolino)dimethoxysilane include, bis(1, 3, 4-trimethyl-1, 2, 3, 4-tetrahydroisoquinolino)-dimethoxysilane, bis(1, 3, 6-trimethyl-1, 2, 3,4-tetrahydroisoquinolino)dimethoxysilane, bis(1, 3, 7-trimethyl-1, 2, 3, 4-tetrahydroisoquinolino)dimethoxysilane, bis(1, 3, 8-trimethyl-1, 2, 3, 4-tetrahydroisoquinolino)dimethoxysi lane, bis(1, 3, 9-trimethyl-1, 2, 3, 4-tetrahydroisoquinolino)dimethoxysilane, bis(3, 4, 6-trimethyl-1, 2, 3, 4-tetrahydroisoquinolino)dimethoxysilane, bis(3, 4, 7-trimethyl-1, 2, 3,4-tetrahydroisoquinolino)-dimethoxysilane, bis(3, 4, 8-trimethyl-1, 2, 3, 4-tetrahydroisoquinolino)dimethoxysilane, bis(3, 4, 9-trimethyl-1, 2, 3, 4-tetrahydroisoquinolino)dimethoxysilane, bis(4, 6, 7-trimethyl-1, 2, 3, 4-tetrahydroisoquinolino)dimethoxysilane, bis(4, 6, 8-trimethyl-1, 2, 3, 4-tetrahydroisoquinolino)dimethoxysilane, bis(4, 6, 9-trimethyl-1, 2, 3, 4-tetrahydroisoquinolino)-dimethoxysilane, bis(6, 7, 8-trimethyl-1, 2, 3, 4-tetrahydroisoquinolino)dimethoxysilane, bis(6, 7, 9-trimethyl-1, 2, 3, 4-tetrahydroisoquinolino)dimethoxysilane, bis(7, 8, 9-trimethyl-1, 2, 3, 4-tetrahydroisoquinolino) dimethoxysilane and the like.

Examples of the bis(tetramethyl-substituted-1, 2, 3, 4-tetrahydroisoquinolino)dimethoxysilane compounds include, bis(1, 3, 4, 6-tetramethyl-1, 2, 3, 4-tetrahydoisoquinolino)-dimethoxysilane, bis(1, 3, 4, 7-tetramethyl-1, 2, 3, 4-tetrahydoisoquinolino)dimethoxysilane, bis(1, 3, 4, 8-tetramethyl-1, 2, 3,4-tetrahydoisoquinolino)dimethoxysilane, bis(1, 3, 4, 9-tetramethyl-1, 2, 3, 4-tetahydoisoquinolino)dimethoxydimethoxysilane, bis(3, 4, 6, 7-tetramethyl-1, 2, 3, 4-tetrahydoisoquinolino)-dimethoxysilane, bis(3, 4, 6, 8-tetramethyl-1, 2, 3, 4-tetrahydoisoquinolino)dimethoxysilane, bis(3, 4, 6, 9-tetramethyl-1, 2, 3, 4-tetrahydroisoquinolino)dimethoxysilane, bis(4, 6, 7, 8-tetramethyl-1, 2, 3, 4-tetrahydroisoquinolino)dimethoxysilane, bis(4, 6, 7, 9-tetramethyl-1, 2, 3, 4-tetrahydroisoquinolino)-dimethoxysilane, bis(6, 7, 8, 9-tetramethyl-1, 2, 3, 4-tetrahydroisoquinolino)dimethoxysilane and the like.

Among these compounds, bis(1, 2, 3, 4-tetrahydroisoquinolino)dimethoxysilane is preferred

Examples of the compounds represented by the general formula (8), include, (1, 2, 3, 4-tetrahydroquinolino) (1, 2, 3, 4-tetrahydroisoquinolino)dimethoxysilane, (2-methyl-1, 2, 3, 4-tetrahydroquinolino) (1-methyl-1, 2, 3, 4-tetrahydroisoquinolino)dimethoxysilane, (3-methyl-1, 2, 3 , 4-tetrahydroquinolino)(3-methyl-1, 2, 3, 4-tetrahydroisoquinolino)-dimethoxysilane, (3-methyl-1, 2, 3, 4-tetrahydroquinolino)(4-methyl-1, 2, 3, 4-tetrahydroisoquinolino)dimethoxysilane, (4-methyl-1, 2, 3, 4-tetrahydroquinolino)(4-methyl-1, 2, 3, 4-tetrahydroisoquinolino)-dimethoxysilane, (4-methyl-1, 2, 3, 4-tetrahydroquinolino)(6-methyl-1, 2, 3, 4-tetrahydroisoquinolino)dimethoxysilane, (6-methyl-1, 2, 3, 4-tetrahydroquinolino)(6-methyl-1, 2, 3, 4-tetrahydroisoquinolino)dimethoxysilane, (6-methyl-1, 2, 3, 4-tetrahydroquinolino) (7-methyl-1, 2, 3, 4-tetrahydroisoquinolino)-dimethoxysilane, (7-methyl-1, 2, 3, 4-tetrahydroquinolino)(7-methyl-1, 2, 3, 4-tetrahydroisoquinolino)dimethoxysilane, (7-methyl-1, 2, 3, 4-tetrahydroquinolino)(8-methyl-1, 2, 3, 4-tetrahydroisoquinolino)dimethoxysilane, (8-methyl-1, 2, 3, 4-tetrahydroquinolino)(8-methyl-1,2,3,4-tetrahydroisoquinolino)-dimethoxysilane, (8-methyl-1, 2, 3, 4-tetrahydroquinolino)(9-methyl-1, 2, 3, 4-tetrahydroisoquinolino)dimethoxysilane, (9-methyl-1, 2, 3, 4-tetrahydroquinolino)(9-methyl-1, 2, 3, 4-tetrahydroisoquinolino)dimethoxysilane and the like.

Among these compounds, (1, 2, 3, 4-tetrahydroquinolino)-(1, 2, 3, 4-tetrahydroisoquinolino)dimethoxysilane is preferred.

Specific examples of the aminosilane compounds represented by the general formula (1) include, the compounds shown by the following chemical structural formulas:

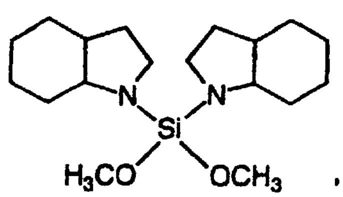 ,

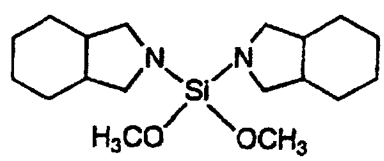 ,

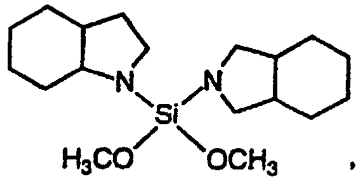 ,

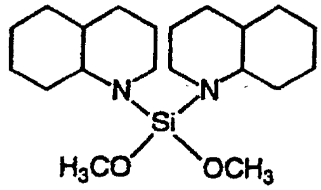 ,

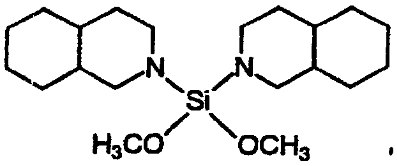 ,

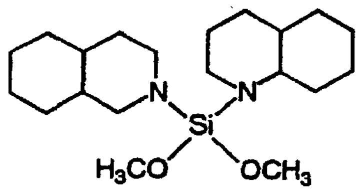 ,

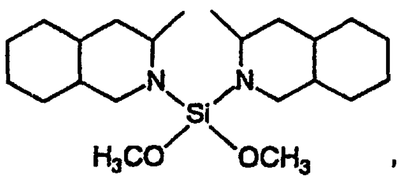 ,

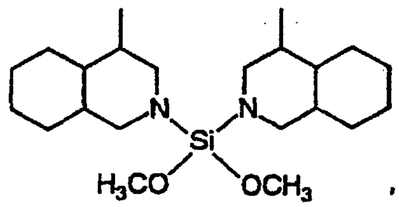 ,

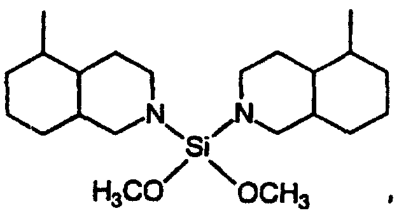 ,

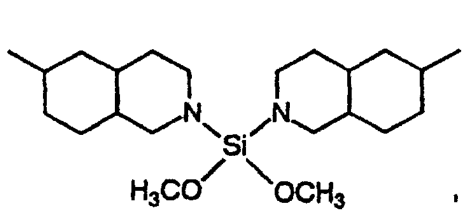 ,

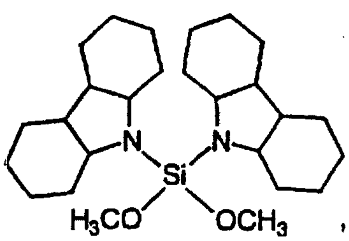 ,

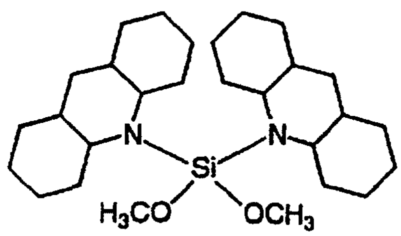 ,

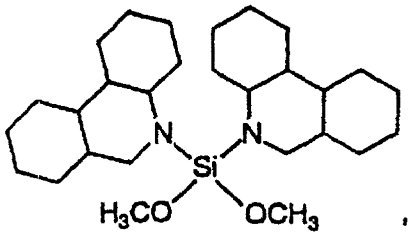 ,

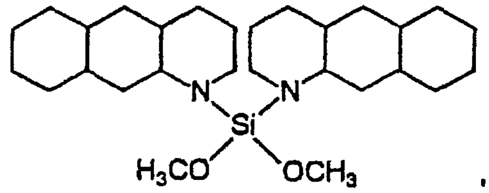 ,

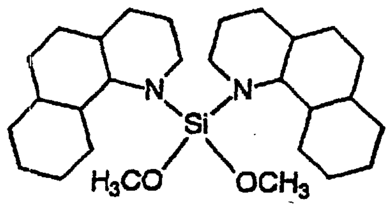 ,

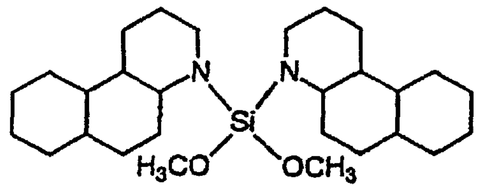 ,

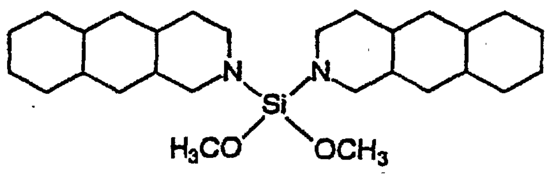 ,

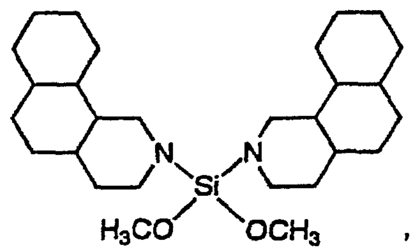 ,

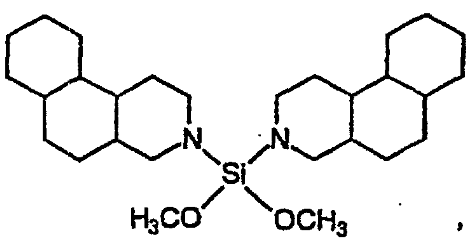 ,

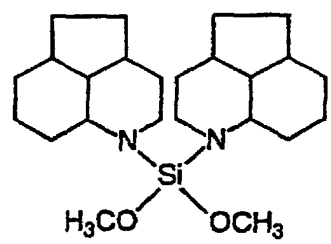 ,

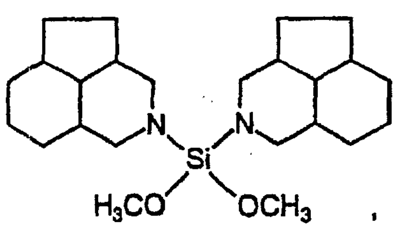 ,

and

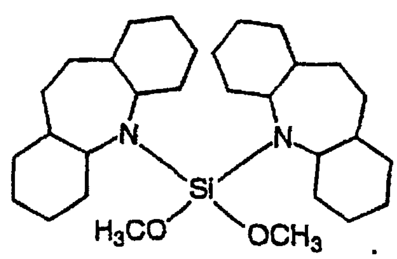 .

An aminosilane compound which is the catalyst constituent (C) represented by the general formula (1) can be synthesized by reacting tetramethoxysilane or dichlorodimethoxysilane with 2 equivalent amounts of magnesium salt or lithium salt of the secondary amine represented by the formula

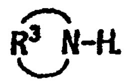

.

Some aminosilane compounds represented by the formula (1) have geometrical isomers since the polycyclic amino group may have a cis- or a trans-isomer. That is, there exist isomers such as (trans-polycyclic amino)(trans-polycyclic amino) dialkoxysilanes, (cis-polycyclicamino)(cis-polycyclicamino)dialkoxysi lanes, and (trans-polycyclicamino)(cis-polycyclicamino)dialkoxysilanes.

Illustrative examples thereof include bis(trans-perhydroquinol ino)dimethoxysilane, bis(cis-perhydroquinolino)dimethoxysilane, bis(trans-perhydroisoquinolino)dimethoxysilane, bis(cis-perhydroisoquinolino)dimethoxysilane, (trans-perhydro(iso)quinolino)(cis-perhydro(iso)quinolino)dimethoxysilane or the like.

Any of those isomers can be used, as a catalyst constituent (C). singly or in the form of a mixture, or a racemate.

The ratio of the amounts of the catalyst constituent (C) to the catalyst constituent (B) is preferably 0.01 to 1.0, particularly preferably 0.05 to 0.33 in terms of atomic ratio (Si/Al) of silicon atom of the aminosilane compound to aluminum atom of the organoaluminum compound.

In the present invention, a chain transfer agent such as hydrogen or the like can be used. The amount of hydrogen required for preparation of an α-olefin polymer having the desired levels of stereoregularity, melting point and molecular weight can be determined appropriately depending on the polymerization method and polymerization conditions. Generally hydrogen is introduced to the polymerization system to keep it in the range of 0.005 MPa to 3 MPa, preferably 0.01 MPa to 1 MPa in terms of hydrogen partial pressure.

In the present invention, there is no particular restriction as to the order of contact of individual catalyst constituents in polymerization of α-olefin, however, it is preferable to contact previously the catalyst constituent (A) with the catalyst constituent (B), then contact with the catalyst constituent (C), or contact previously the catalyst constituent (B) with the catalyst constituent (C), then contact with the catalyst constituent (A).

In the first aspect of the present invention, an α-olefin usable includes propylene, 1-butene, 1-hexene, 4-methylpentene-1, 1-octene and the like. In the present invention, the polymerization of α-olefin can also be conducted by copolymerization with a small amount of ethylene or other α-olefins in order to lower the melting point for reducing the heat-sealing temperature of the objective film sheet, and for the purpose to improve the transparency of the film.

In the first aspect of the present invention, the polymerization method usable is for example, slurry polymerization using a non-polar solvent; gas-phase polymerization which comprises contacting a monomer in a gas state with a catalyst; bulk polymerization which comprises slurry polymerization in a liquid-state monomer used as a solvent. In conducting the above-mentioned methods, either continuous polymrization or batch-wise polymerization can be used.

In a bulk polymerization, it is preferable to conduct under conditions of temperature and pressure capable of keeping an α-olefin or a mixed monomer of α-olefins as in liquid-state. Polymerization temperature is generally 30 to 90°C, preferable 50 to 80°C and polymerization time is generally 5 minutes to 5 hours.

In a gas-phase polymerization, the polymerization is conducted under conditions of temperature and pressure capable of keeping an α -olefin or a mixed monomer of α-olefins as in liquid-state.

In the gas-phase polymerization, pressure condition is generally atmospheric pressure to 3MPa, preferably atmospheric pressure to 2MPa; polymerization temperature is generally 30 to 120°C, preferably 40 to 100°C; and polymerization time is generally 30 minute to 10 hours, preferably 1 to 7 hours.

In a slurry polymerization, the polymerization is conducted by introducing an α-olefin or a mixed monomer of α-olefins in the presence of an inert solvent. Specific examples of the inert solvent include, propane, butane, pentane, hexane, heptane, octane and the like.

The catalyst of the present invention shows high polymerization activity when the polymerization is conducted specifically at temperature of over 70° C, and by using said catalyst an α-olefin polymer having high stereoregularity and broad molecular weight distribution can be obtained. In conducting a gas-phase polymerization, it is preferred to use a prepolymer as the solid catalyst constituent (A) prepared by the methods described below. Further, in a gas phase polymerization, for the purposes to remove the heat of polymerization and eliminate the static electricity, a non-polar solvent, such as propane, butane, hexane, heptane, octane or the like can be used partially together with an α -olefin monomer to increase the productivity of the polymerization.

In the first aspect of the present invention, it is preferred to conduct prepolymerization of ethylene or an α-olefin according to one of the above-mentioned various polymerization methods and then to conduct main polymerization. The effects of prepolymerization are the improvements of polymerization activity, stereoregularity of the polymer

and stabilization of particle shapes of the polymer. As to the method of prepolymerization, pre-treated solid catalyst can be prepared by previously contact-treating a solid catalyst constituent (A) with organoaluminum compound of the catalyst constituent (B) and aminosilane compound of the catalyst constituent (C), then the resulting solid is washed to obtain the pre-treated solid catalyst for the prepolymerization. Further, a restricted amount of ethylene or an α-olefin is polymerized by using the catalyst constituent (A) or the above pre-treated solid catalyst, in the presence of the catalyst constituents (B) and (C) to obtain pre-treated polymerization solid

In the present invention, when the above pre-treated solid catalyst or pre-treated polymerization solid is used as the solid catalyst constituent in the main polymerization, the catalyst constituent (C) can be omitted in the polymerization.

In the first aspect of the present invention, as to the contact treatment, catalyst constituents (A), (B) and (C) are mixted and reacted generally at 0 to 100° C for 0.1 to 10 hours. The order of mixing of individual constituents is not particularly restricted, and the order of the constituent (A), the constituent (B) and the constituent (C) is generally preferred After the contact-treatment, the resulting solid is washed with an inert hydrocarbon solvent, such as n-heptane, and separated by filtration for use in the solid constituent of the catalyst for polymerization or prepolymerization.

In the first aspect of the present invention, prepolymerization can be conducted by gas-phase method, slurry method bulk method or the like. The solid obtained in prepolymerization is used in main polymerization after or without being separated

The prepolymerization time is generally 0.1 to 10 hours, and it is preferred to continue prepolymerization until a prepolymer is formed in an amount of 0. to 100 g per g of the catalyst solid constituent. When the amount of the polymer formed is less than 0. g per g of the catalyst solid constituent, the activity of main polymerization is not good enough, a large amount of the catalyst residue is remained in the polymer, and the stereoregularity of an α-olefin polymer obtained is insufficient. When the amount of prepolymer obtained is more than 100 g, the polymerization activity tends to be lowered and the introduction of the prepolymers to a polymerization vessel becomes difficult. Prepolymerization is conducted at 0 to 100° C, preferably at 10 to 90° C in the presence of individual catalyst constituents. When prepolymerization is conducted at a temperature higher than 50° C, it is preferred to adopt a low concentration of ethylene or an α-olefin or a short prepolymerization time. Otherwise, it is difficult to control the amount of prepolymer in the range of 0. to 100 g per g of the catalyst solid constituent and the stereoregularity of the α-olefin polymer tends to be lowered.

The amount of the organoaluminum compound of the catalyst constituent (B) used in prepolymerization is generally 0.5 to 1. 000, preferably 1 to 100 in terms of atomic ratio (Al/Ti) of aluminum atom of the organoaluminum compound to titanium atom of the catalyst solid constituent (A). The amount of the aminosilane compound of the catalyst constituent (C) used is generally 0.01 to 1, preferably 0. 08 to 0.5 in terms of atomic ratio (Si/Al) of silicon atom of the aminosilane compound to aluminum atom of the organoaluminum compound. In prepolymerization, hydrogen gas may coexist as necessary.

The catalyst system used in the present invention has high catalytic activities, further the α-olefin polymer thus obtained has high stereoregularity and high melting point, also has broad molecular weight distribution in wide molecular weight range. The molecular weight distribution in terms of a Mw/Mn ratio is over 10, preferably over 12. particularly preferably over 15, obtained by calculating from the weight-average molecular weight (Mw) and the number-average molecular weight (Mn), both of which are measured by means of GPC (gas permeation chromatography), obtained as the converted values of polystyrene.

Since the α-olefin polymer relating to the first aspect of the present invention has high stereoregularity and broad molecular weight distribution, thus the molded article posseses excellent rigidity, heat resistance and mechanical characteristics such as tensile strength and the like; furthermore, the molded article produced therefrom is completely free from the problem relating to poor external appearances, such as flow marks, because the polymer has high die swell value at the shearing speed when it is melted. The α-olefin polymer of the present invention can be used not only singly but also used as the material for compounding by blending with other plastics and/or elastomers. Further, the polymer can be used together with inorganic fillers, such as glass fibers, talc or the like, and with organic filler of reinforcing materials, as well as with nucleating agents. Thus, the α-olefin polymer performs excellent characteristic as material of construction for automobiles and home electrical appliances; the use thereof is not limited thereto though.

By polymerizing an α-olefin using the catalyst of the present invention which possesses high polymerization activity, α-olefin polymer having high stereoregularity, high melting point and broad molecular weight distribution can be prepared. Further, by copolymerizing an α-olefin such as, for example, propylene with ethylene or other α-olefin using the catalyst of the present invention, an α-olefin copolymer having good randomness and high viscoelastisity can be prepared.

Since the α-olefin polymer prepared by the present invention has a molecular weight distribution which is in a similar range to that of an α-olefin polymer prepared by using a conventional titanium trichloride type catalyst which is called as a catalyst of the second-generation and has a low polymerization activity, the α-olefin polymer prepared by the present invention has good molding characteristics and the molded articles are free from such a problem as

poor external appearances inclusive of the formation of flow marks. Therefore, the catalyst system in the present invention can be usable as the substitution for conventional titanium trichloride type catalysts. Additionally, since the polymerization activity thereof is quite higher as compared with that of conventional titanium trichloride type catalyst, thus, the catalyst system of the present invention is quite useful for simplifying the polymerization processes and reducing the production cost by eliminating the step previously needed for removing the residual catalyst from the polymer, i.e., a process for removing the ashes from the polymer using a large amount of an organic solvent.

In the present aspect of this invention, a propylene block copolymer can be produced by preparing a crystalline propylene polymer by polymerizing firstly propylene alone or copolymerizing propylene with a limited amount of another α-olefin in the presence of the above catalyst system, and then preparing a rubber-like propylene copolymer by copolymerizing subsequently propylene with an α-olefin other than propylene without deactivating the above catalyst system after the first stage.

The polymerization of the first stage may be homopolymerization of propylene, or may be copolymerization of propylene with an α-olefin other than propylene. Specific examples of α-olefins include acyclic monoolefins, such as ethylene, butene-1, 3-methylbutene-1, 3-methylpentene-1, 4-methyl-pentene-1, hexene-1, 4-methylhexene-1, octene-1, styrene-1, 2-methylstyrene, 3-methylstyrene, 4-methylstyrene, vinylcyclohexane, vinylcyclopentane, 2-vinylnaphthalene, 9-vinylanthracene and the like; cyclic monoolefins, such as cyclopentene, cyclohexene, norbornene and the like; and diolefins, such as dicyclopentadiene, 5-ethylidenenorbornene-2,4-vinylcyclohexene, 1,5-hexadiene and the like.

The portion of an α-olefin other than propylene contained in a crystalline polymer prepared by the polymerization of the first stage should be within such a range that the characteristics as polypropylene is retained preferably for example 10% by weight or less. If, however the content of an α-olefin other than propylene contained in the crystalline polymer exceeds 10 % by weight, then the amount of by-products of low crystallinity polymer increases.

In the second stage of polymerization, a rubber-like copolymer is prepared by copolymerizing propylene with an α-olefin other than propylene. Specific examples of the α-olefins include, acyclic monoolefins, such as ethylene, butene-1, 3-methylbutene-1, 3-methylpentene-1, 4-methyl-pentene-1, hexene-1, 4-methylhexene, octene-1, styrene, 2-methylstyrene, 3-methylstyrene, 4-methylstyrene, vinylcyclohexane, vinylcyclopentane, 2-vinylnaphthalene, 9-vinylanthracene and the like; cyclic monoolefin, such as cyclopentene, cyclohexene, norbornene and the like; and diolefins, such as dicyclopentadiene, 5-ethylidenenorbornene, 4-vinylcyclohexene, 1,5-hexadiene and the like.

The content of the rubber-like polymer obtained in the second stage, may be 3 to 40 % by weight, preferably 5 to 30 % by weight in the amount of the whole block copolymer. The content of an α-olefin other than propylene contained in the rubber-like copolymer is preferably 10 to 40 % by weight.

As to the way of polymerization in the first stage and copolymerization in the second stage of the present invention, a slurry polymerization conducted in an inert solvent, a bulk polymerization conducted by using a liquid-state monomer as the solvent, a gas-phase polymerization by contacting a gaseous monomer with a catalyst, and the combinations of these methods can be used. Among these methods, it is preferable to conduct a bulk polymerization by polymerizing a liquid-state monomer in the first stage, then conducting a gas-phase polymerization by contacting a gaseous monomer with a catalyst in the second stage.

In a bulk polymerization, it is preferable to conduct under conditions of temperature and pressure capable of keeping propylene or a mixed monomer of propylene with other α-olefins as in liquid-state. Polymerization temperature is generally 30 to 90° C, preferably 50 to 80° C, and polymerization time is generally 5 minutes to 5 hours.

In a gas-phase polymerization, the polymerization is conducted under conditions of temperature and pressure capable of keeping-propylene or a mixed monomer of propylene with other α-olefins as in liquid-state.

In the gas-phase polymerization, pressure condition is generally atmospheric pressure to 3MPa, preferably atmospheric pressure to 2MPa; polymerization temperature is generally 30 to 120° C, prefereably 40 to 100° C; and polymerization time is generally 30 minute to 10 hours, prefereably 1 to 7 hours.

In a slurry polymerization, the polymerization is conducted by introducing propylene or a mixed monomer of propylene with an α-olefin other than propylene in the presence of an inert solvent. Specific examples of the inert solvent include, propane, butane, pentane, hexane, heptane, octane and the like.

In producing a propylene block copolymer, it is preferred to use a prepolymer as the solid catalyst constituent (A) prepared by the above-mentioned methods.

As to the remaining conditions for the copolymerization, the same ones as those for the homopolymerization can be employed.

Since the catalyst system of the present invention has high catalytic activities, a propylene block copolymer thus obtained has high stereoregularity and high melting point, also has broad molecular weight distribution. Its molecular weight distribution in terms of a Mw/Mn ratio is lager than 15, preferably larger than 20, particularly preferably larger than 30, obtained by calculating from the weight-average molecular weight (MW) and the number-average molecular weight (Mn), both of which are measured by means of GPC using polystyrene as the standard substance.

Since the propylene block copolymer obtained in the present invention has high crystallizability and broad

molecular weight distribution, thus the molded article posseses excellent rigidity, heat resistance and mechanical characteristics such as tensile strength and the like; furthermore, the molded article is free from such problem as poor external appearances, inclusive of the formation flow marks, because the polymer has high die swell value at the shearing speed when it is melted. The propylene block copolymer of the present invention can be used not only singly but also used as a material for compounding by blending with other plastics and/or elastomers. Further, the block copolymer can be used together with inorganic fillers, such as glass fibers, talc or the like; and with organic filler of reinforcing materials, as well as with nucleating agents. Thus, the α-olefin polymer performs excellent characteristic as material of construction for automobiles and home electrical appliances; the use thereof is not limited thereto though.

The process of the invention can provide a propylene polymer which has Mw of 200,000 or less in terms of polystyrene measured by GPC, Mw/Mn of 10 or more, mmmm isopentad fraction in $^{13}C$-NMR of 96% or more, and melting point of 162° C or higher when measured by DSC.

The propylene polymer of the present invention has the following characteristics; that is, weight-average molecular weight (Mw) in terms of polystyrene by GPC measurement is 200,000 or less, prefereably in the range of 50,000 to 200,000, thus it has relatively lower molecular weight.

The ratio of weight-average molecular weight to number-average molecular weight (Mw/Mn) is 10 or more, preferably 12 or more, particularly 13 or more, further particularly preferably in the range of 13 to 30.

According to $^{13}C$-NMR measurement described in "Macromolecules", Vol. 8, page 687 (1975), the configulation (dd or II is defined as m) of 5 types of methyl groups, mmmm fraction of continuing propylene monomer unit is 96% or higher, preferably 97% or higher, particularly preferably 97.5 to 99.5%.

The melting point measured by DSC method is preferably 162.5 to 166° C at temperature gradient speed of 10° C per 1 minute.

The second aspect of the present invention relates to an aminosilane compound represented by the folowing general formula (1)

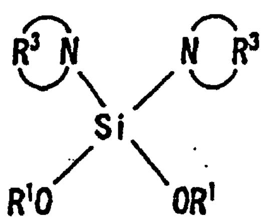

(1).

(wherein $R^1$ represents a hydrocarbyl group having 1 to 8 carbon atoms; and

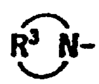

represents a polycyclic amino group wherein the number of carbon atoms is 7 to 40, and the carbon atoms forming the cyclic skeleton are bonding directly to the nitrogen atom).

In case of polymerizing an α-olefin by using the catalyst system of the present invention containing an aminosilane compound as one of the constituents, there can be prepared, with high polymerization activity, an α-olefin polymer having a high stereoregularity, a high melting point, and a broad molecular weight distribution. Furthermore, in case of copolymerizing an α-olefin with ethylene or other α-olefins by using said catalyst system, there can be prepared a copolymer having good randomness and high melt viscoelasticity.

As compared with a conventional titanium trichloride type catalyst being called as the second generation catalyst, the above catalyst system of the present invention can show high polymerization activity. Furthermore, thus obtained α-olefin polymer has a molecular weight distribution which is almost equal to that of the polymer prepared by using the above conventional titanium trichloride type catalyst. Thus, the α-olefin polymer prepared by using the catalyst of the present invention has good molding characteristics and is free from a problem of external appearance of the molded articles, inclusive of flow mark. Therefore, the catalyst system of the present invention can be used as the substitution for the conventional titanium trichloride type catalyst. Additionally, since the polymerization activity thereof is quite higher as compared with that of the conventional titanium trichloride type catalyst, the catalyst system of the present invention is quite useful for simplifying the polymerization process and reducing the production cost by eliminating the steps previously needed for removing the residual catalyst from the polymers; that is, the steps for removing the ashes by use of a large amount of an organic solvent.

## EXAMPLES

The present invention will be explained by the following Examples, Preparation examples, Synthesis examples and Comparative examples. However, the scope of the present invention is not restricted only to those EXAMPLES.
In the following EXAMPLES, the term (co) polymerization reaction rate means an yield (kg) of the (co) polymer obtained per 1 g of the solid catalyst.
Melt-flowability ratio (M.F.R.) is determined by measuring an amount by weight (g) of a polymer melted at a temperature of 230° C and under load of 2.16 kg for 10 minutes in accordance with the method prescribed in ASTM-D1238.
Melting point (Tm) is measured by use of DSC (model:ASC-5200, manufactured by Seiko Denshi Kohgyo, Co.). As to the measuring conditions, 10 mg of propylene polymer is heated at temperature from 23° C until 230° C with a temperature gradient of 10° C per minute, thereafter the polymer was kept as it is for 5 minutes, then the temperature was dropped from 230° C until 40° C with a temperature gradient of 5° C per minute. The melting point is measured as a point that the polymer thus treated is remelted by heating from 40° C until 230° C by temperature gradient of 10° C per minute.
Stereoregularity of polymer is determined from isopentad fraction (mmmm)(%) obtained by the microtacticity, which means one of the indications of stereoregularity of polymer is calculated from the ratio of peak strengths of $^{13}$C-NMR spectrum in accordance with the method described in "Macromolecules, Vol. 8, page 687, (1975). The $^{13}$C-NMR spectrum is measured by an apparatus of model EX-400 (manufactured by JEOL Ltd.) at temperature of 130° C, by using TMS as the standard substance and o-dichlorobenzene as a solvent.
Molecular weight distribution of a polymer is calculated from the ratio (Mw/Mn) of weight-average molecular weight (Mw) and number-average molecular weight (Mn) which are determined by using polystyrene as the standard substance, an instrument of GPC (model:150CV type, manufactured by Waters, & Co. ), o-dichlorobenzene as the solvent, column of SHODEX, temperature at 145° C, and concentration of 0.05% by weight.
Block copolymerization ratio is defined as a ratio (%) of the yield (parts by weight) of copolymer to the yield (parts by weight) of the whole polymer as shown by the following formula:

[Yield (parts by weight) of copolymer]/

[Yield (parts by weight) of the whole polymer] X 100

Heptane insolubles (H. I.) is defined, as a ratio (%) of the amount (parts by weight) of insoluble matters obtained by extracting (by Soxhlet extractor) a polymer sample with boiling n-heptane to the amount (parts by weight) of the polymer sample charged as shown by the following formula:

[Insoluble polymer (parts by weight)]/

[Charged polymer (parts by weiht) X 100

The amount of ethylene contained in the formed copolymer is determined, as shown below:
A copolymer sample is put on a hot plate and melted by heating, then the sample is cooled under pressure, and quenched in a water bath, then shaped into a film form having about 30 μ of thickness. By using a infrared spectrophotometer are measured the absorption peaks of thus prepared film at 974 cm-1 and 720cm-1, the ethylene content is calculated by referring to a calibration curve prepared previously.
Intrinsic viscosity [η] of a rubber component is determined as shown below:
20 mg of a sample is weighed precisely and put in a measuring flask of 25 ml. and 20 ml of decaline containing 0.3% of BHT is added thereto. The sample is dissolved completely at 135° C, by using a thermostatic chamber being preset at temperature of 135° C, then 20 ml of the above sample solution is transferred into a viscometer, and measured the time taken for passing two gage marks to obtain the intrinsic viscosity [η] of the rubber component by using the viscosity formula.
Modulus in bending is determined in accordance with the method of ASTM-D-790. That is, 0.1 % by weight of Irganox-1010, 0.1 % by weight of Irganox-1076, 0.1 % by weight of calcium stearate are added, as the additives, to an α-olefin polymer powder. The resulting mixture is shaped into pellets by use of an extruder, then a plurality of test pieces are prepared by use of an injection mold (model:J100SAII manufactured by The Japan Steel Works, Ltd.) under the condition of 1.5 MPa of back pressure and at 60° C of molding temperature.
Heat distortion temperature is determined in accordance with the method of ASTM-D-648, by use of a test

piece prepared by injection molding at the same time as the above.

In the following EXAMPLES, unless otherwise noticed the term "%" means "%" by weight".

First of all, synthesis examples of aminosilane compounds relating to the present invention are explained

**Synthesis Example 1**

Synthesis of bis(perhydroisoquinolino)dimethoxysilane

In a flask of 200 ml capacity being equipped with a dropping funnel, a stirrer piece was put therein, after replaced atmosphere in the flask with nitrogen gas by use of a vacuum pump, 0.12 mol of perhydroisoquinoline and 60 ml of n-heptane were charged. Into the dropping funnel, 75.0 ml (0.12 mol) of a hexane solution containing 1.6 mol/liter of n-butyllithium was placed. Under ice-cooling, the hexane solution of n-butyllithium was added dropwise slowly to the flask, then the reaction mixture was stirred at room temperature for 1 hour to obtain lithium perhydroisoquinolide. Thus obtained lithium perhydroisoquinolide was transferred to next reaction system together with the solvent, without being isolated from the reaction system.

As to the next reaction system, into a flask of 500 ml capacity being equipped with a dropping funnel and attaching with a glass filter, was put a stirrer piece, after replaced atmosphere in the flask with nitrogen gas by use of a vaccum pump, 0.06 mol of tetramethoxysilane and 60 ml of n-heptane were charged in the flask.

Into the dropping funnel, 0.12 mol of lithium perhydroisoquinolide previously synthesized was placed. Under ice-cooling, the lithium perhydroisoquinolide was added dropwise slowly into the flask, then the reaction mixture was stirred at room temperature for 12 hours. After confirming that the desired product was formed sufficiently, the precipitates were separated by filtration using the glass filter. The resulting filrate was purified by distillation to obtain bis-(perhydroisoquinolino)dimethoxysilane. Boiling point of the desired product was 180° C/1 mmHg, and the purity was 98.6 % determined by use of a gas chromatography.

Further, the assigment of $^{1}H$-NMR and $^{13}C$-NMR were determined as follows. NMR peaks was determined by the method described in "J. Chem. Soc. Perkin, Trans.", Vol. 2, 510-511, (1979).

δ (ppm)= 0. 80-1. 90 ($-CH_2-$, CH-, 23. 8H, m)
3. 03-3. 30 ($-CH_2-N-CH_2-$, 7.9H, m)
3.45 ($CH_3-O-Si$, 6. 0H, s)

**$C^{13}$-Chemical shifts for bis(perhydro isoquinolino)dimethoxysilane in $CDCl_3$**
**(p.p.m downfield from $Me_4Si$)**

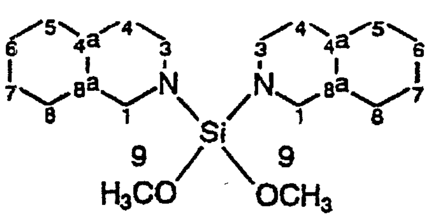

| | δ (ppm) | |
|---|---|---|
| C-atom | trans | cis |
| 1 | 51.6 | 49.2 |
| 3 | 45.8 | 44.5 |
| 4 | 35.0 | 28.6 |
| 4a | 42.8 | 35.1 |
| 5 | 33.7 | 28.6 |
| 6 | 26.5 | 22.6 |
| 7 | 26.3 | 25.4 |
| 8 | 30.2 | 25.4 |
| 8a | 44.4 | 36.7 |
| 9 | 50.4 | 50.4 |

**Synthesis Example 2**

Synthesis of bis(perhydroquinolino)dimethoxysilane

By a method similar to that of employed in Synthesis Example 1 as above, except that perhydroquinoline was used in place of perhydroisoquinoline. The boiling point of the objective product was 180° C/1mmHg, and the purity was 98.0% determined by a gas chromatography.

Further, the assignment of $^{1}$H-NMR and $^{13}$C-NMR was determined as follows. NMR peaks was determined by the methods described in "J. Chem. Soc. Perkin, Trans.". Vol. 2, 615. 621 (1972), and "J. Chem. Soc. Perkin. Trans.". Vol. 2, 842. (1972).

δ (ppm)= 0. 90-2. 10 ($-CH_2-$, -CH-, 26. 0H, m)
2. 60-3. 20 ($-CH_2-N-CH_2-$, 6. 0H, m)
3.46 ($CH_3$-O-Si, 6. 0H, s)

**$C^{13}$-Chemical shifts for bis(perhydro quinolino)dimethoxysilane in $CDCl_3$ (p.p.m downfield from $Me_4Si$)**

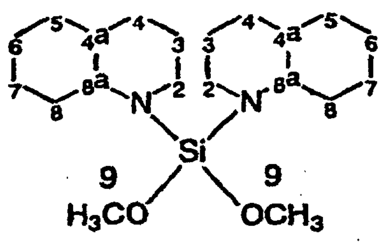

| C-atom | δ (ppm) trans | δ (ppm) cis |
|---|---|---|
| 2 | 49.9 | 48.4 |
| 3 | 28.3 | 20.5 |
| 4 | 33.8 | 31.6 |
| 4a | 42.9 | 38.7 |
| 5 | 33.5 | 26.4 |
| 6 | 25.8 | 26.4 |
| 7 | 24.8 | 20.5 |
| 8 | 36.6 | 32.4 |
| 8a | 63.8 | 52.8 |
| 9 | 50.2 | 50.2 |

**Synthesis Example 3**

Synthesis of bis(1, 2, 3, 4-tetrahydroisoquinolino) dimethoxysilane

By a method similar to that of employed in Synthesis Example 1 as above, except that 1, 2, 3, 4-tetrahydro-isoquinoline was used in place of perhydroisoquinoline. The boiling point of the objective product was 168.5° C/0. 6mmHg, and the purity was 97.7% determined by a gas chromatography.

Further, the assignment of $^{1}$H-NMR was determined as follows.

δ (ppm)= 2. 79 ($-CH_2-CH_2$-N-Si, 4. 2H, t)
3.33 ($-CH_2-CH_2$-N-Si, 4. 3H, t)
3.54 ($CH_3$-O-Si, 6. 0H, s)
4.24 (=C-$CH_2$-N-Si, 4.3H, s)
7.01 - 7.18 (-CH=CH-CH=CH-, 8.3H, m)

**Synthesis Example 4**

Synthesis of bis(1, 2, 3, 4-tetrahydroquinolino)dimethoxysilane

By a method similar to that of employed in Synthesis Example 1 as above, except that 1, 2, 3, 4-tetrahydroquinoline was used in place of perhydroisoquinoline. The boiling point of the objective product was 192° C/0.7mmHg,

and the purity was 98% determined by a gas chromatography.

Further, the assignment of $^1$H-NMR was determined as follows.

δ (ppm)= 1. 96 ($-CH_2-CH_2-CH_2-$, 4. 3H, m)
2.88 ($=CH_2-CH_2-$, 4. 3H, t)
3.57 ($=C-N-CH_3-$, 4.3H, t)
3.65 ($CH_3-O-Si$, 6. 0H, s)
6.70-7.17 ($-CH=CH-CH=CH-$, 8. 2H, m)

**Synthesis Example 5**

Synthesis of bis(perhydroisoindolino)dimethoxysilane

By a method similar to that of employed in Synthesis Example 1 as above, except that perhydroisoindole was used in place of perhydroisoquinoline. The boiling point of the objective product was 165.5° C/ 0. 9mmHg, and the purity was 96.2% determined by a gas chromatography.

Further, the assignment of $^1$H-NMR and $^{13}$C-NMR was determined as follows. The NMR peaks were determined according to the method described in Patterson. Soedigdo, J. Org. Chem., Vol. 32, 1081-1086 (1972).

δ (ppm)= 1. 29-2. 05 ($-CH_2-$ + $-CH-$, 20. 9H, m)
2.90-3.11 ($-CH_2-$ N $-CH_2-$, 8. 3H, m)
3.51 ($CH_3-O-Si$, 6.0H, s)

$C^{13}$-Chemical shifts for bis(perhydro isoindolino)dimethoxysilane in $CDCl_3$
(p.p.m downfield from $Me_4Si$)

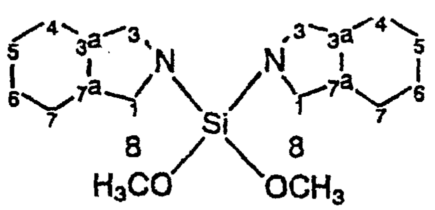

| C-atom | δ (ppm) trans | δ (ppm) cis |
|---|---|---|
| 1 | - | 50.5 |
| 3 | - | 50.5 |
| 3a | - | 38.7 |
| 4 | - | 26.1 |
| 5 | - | 23.3 |
| 6 | - | 23.3 |
| 7 | - | 26.1 |
| 7a | - | 38.7 |
| 8 | - | 50.3 |

**Synthesis Example 6**

Synthesis of bis(perhydroindolino)dimethoxysilane

By a method similar to that of employed in Synthesis Example 1 as above, except that perhydroindole was used in place of perhydroisoquinoline. The boiling point of the objective product was 150° C/0. 8 mmHg, and the purity was 97.5% determined by a gas chromatography.

Further, the assignment of $^1$H-NMR and $^{13}$C-NMR was determined as follows. The NMR peaks were determined according to the method described in Patterson, Soedigdo, J. Org. Chem., Vol. 32. 1081-1086 (1972).

δ (ppm)= 1. 00-2. 15 ($-CH_2-$ + $-CH-$, 23. 4H, m)
3.05-3.25 ($-CH_2-$ N $-CH_2-$, 6.1H, m)
3.45 ($CH_3-O-Si$, 6. 0H, s)

$C^{13}$-Chemical shifts for bis(perhydro indolino)dimethoxysilane in $CDCl_3$

(p.p.m downfield from $Me_4Si$)

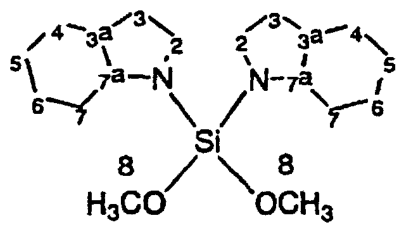

| | δ (ppm) | |
|---|---|---|
| C-atom | trans | cis |
| 2 | 44.5 | 47.9 |
| 3 | 28.3 | 31.6 |
| 3a | 39.3 | 46.2 |
| 4 | 26.7 | 29.9 |
| 5 | 21.3 | 25.2 |
| 6 | 24.1 | 26.2 |
| 7 | 30.9 | 32.6 |
| 7a | 57.3 | 64.6 |
| 8 | 49.9 | 49.9 |

**Synthesis Example 7**

Synthesis of n-propyl(perhydroisoquinolino)dimethoxysilane (not part of the invention)

In a flask of 200 ml capacity being equipped with a dropping funnel, a stirrer piece was put therein, after replaced atmosphere in the flask with nitrogen gas by use of a vacuum pump, 0.06 mol of perhydroisoquinoline and 60 ml of n-heptane were charged In the dropping funnel, 37.5 ml (0. 06 mol) of hexane solution containing 1. 6 mol/ liter of n-butyllithium was placed Under ice-cooling, the above hexane solution of n-butyllithium was added dropwise slowly into the flask, then the reaction mixture was stirred at room temperature for 1 hour to obtain lithium perhydroisoquinolide. Thus obtained lithium perhydroisoquinolide was transferred to next reaction system together with the solvent, without being isolated from the reaction system.

As to the next reaction system, into a flask of 500 ml capacity attaching a glass filter and equipped with a dropping funnel, a stirrer piece was put therein, after replaced atmosphere in the flask with nitrogen gas by use of a vaccum pump, 0.06 mol of tetramethoxysilane and 60 ml of n-heptane were placed in the flask.

In the dropping funnel, 0.06 mol of lithium perhydroisoquinolide which was synthesized previously was placed. Under ice-cooling, lithium perhydroisoquinolide was added dropwise slowly into the flask, then the reaction mixture was stirred at room temperature for 12 hours. After confirming that the desired product was formed sufficiently, the precipitate was separated by filtration using the glass filter. The resulting filtrate was purified by distillation to obtain n-propyl (perhydroisoquinolino)dimethoxysilane. Boiling point of the desired product was 104.7° C/1 mmHg, and the purity was 99.8 % determined by a gas chromatography.

Further, the assignment of $^1$H-NMR was determined as follows.

δ (ppm)= 0. 60 ($-CH_2-Si-$, 2. 0H, t, J=8. 2Hz)
0.94 ($CH_3-CH_2-$, 3. 7H, t, J=7. 1Hz)
1. 05-1. 80 ($CH_3-CH_2-+-CH_2-+-CH-$, 13. 6H, m)
2. 50-3. 30 ($-CH_2-N-CH_2-$, 4. 0H, m)
3. 47 ($CH_3-O-Si$, 6. 0H, s)

**Synthesis Example 8**

Synthesis of isopropyl(perhydroisoquinolino)dimethoxysilane (not part of the invention)

By a method similar to that of employed in Synthesis Example 7, the objective compound was synthesized, except that isopropyltrimethoxysilane was used in place of n-propyltrimethoxysilane. The boiling point of the objective product was 110.8° C/2mmHg, and the purity was 99. 9% determined by a gas chromatography.

Further the assignment of $^1$H-NMR was determined as follows.

δ (ppm)= 0. 97 ($CH_3$-CH-$CH_3$, 7. 9H, m)
1.01-1.83 (-$CH_2$-+-CH-, 11. 6H, m)
2. 55-3. 32 (-$CH_2$-N-$CH_2$-, 4.3H, m)
3. 49 ($CH_3$-O-Si, 6.0H, s)

**Synthesis Example 9** (not part of the invention)

Synthesis of isobutyl(perhydroisoquinolino)dimethoxysilane

By a method similar to that of employed in Synthesis Example 7, the objective compound was synthesized, except that isobutyltrimethoxysilane was used in place of n-propyltrimethoxysilane. Boiling point of the objective product was 108.5° C/1mmHg, and the purity was 97. 3% determined by a gas chromatography.

Further the assignment of $^1$H-NMR was determined as follows.

δ (ppm)= 0.58 (-$CH_2$-Si, 2. 0H, d, J=7. 2Hz)
0.94 ($CH_3$-CH-, 6. 0H, d, J=6. 6Hz)
1.77-1.84 ($CH_3$-CH-+-$CH_2$-+-CH, 13. 0H, m)
2.50-3.30 (-$CH_2$-N-$CH_2$-, 4.3H, m)
3. 48 ($CH_3$-O-Si, 6. 0H, s)

**Synthesis Example 10** (not part of the invention)

Synthesis of diethylamino(perhydroisoquinolin)dimethoxysilane

By a method similar to that of employed in Synthesis Example 7, the objective compound was synthesized, except that diethylaminotrimethoxysilane was used in place of n-propyltrimethoxysilane. Boiling point of the objective product was 123.0° C/2mmHg, and purity was 98. 6% determined by a gas chromatography.

Further the assignment of $^1$H-NMR was determined as follows.

δ (ppm)= 0. 99 ($CH_3$-$CH_2$-N-, 6. 9H, t, J=7. 0Hz)
1. 07-1. 74 (-$CH_2$-+-CH-, 12. 0H, m)
2.40-3.33 (-$CH_2$-N-$CH_2$-, 8. 4H, m)
3.46 ($CH_3$-O-Si, 6. 0H, s)

**Synthesis Example 11**

Synthesis of (perhydroquinolino)(perhydroisoquinolino)-dimethoxysilane

In a flask of 200 ml capacity being equipped with a dropping funnel, a stirrer piece was put therein, after replaced atmosphere in the flask with nitrogen gas by use of a vacuum pump, 0.06 mol of perhydroquinoline and 60 ml of n-heptane were charged. In the dropping funnel, 37.5 ml (0.06 mol) of a hexane solution containing 1.6 mol/liter of n-butyllithium was placed Under ice-cooling, the hexane solution of n-butyllithium was added dropwise slowly into the flask, the reaction mixture was stirred at room temperature for 1 hour to obtain lithium perhydroquinolide. Thus obtained lithium perhydroquinolide was transferred to next reaction system together with the solvent, without being isolated from the reaction mixture. Further, by a procedure similar to that employed as above, except that perhydroisoquinoline was used in place of perhydroquinoline, there was synthesized lithium perhydroisoquinolide. As to the next reaction system, into a flask of 500 ml capacity attached with a glass filter and equipped with a dropping funnel, a stirrer piece was put therein, after replaced atmosphere in the flask with nitrogen gas by use of a vaccum pump, 0.06 mol of tetramethoxysilane and 60 ml of n-heptane were placed in the flask. In the dropping funnel, 0.06 mol of lithium perhydroquinolide synthesized previously was placed. Under ice-cooling, the lithium perhydroquinolide was added dropwise slowly into the flask, then the reaction mixture was stirred at room temperature for 1 hour, further stirred at 80° C for 3 hours. Next, into the dropping funnel which was emptied, 0.06 mol of lithium perhydroisoquinolide synthesized previously was placeed. Under ice-cooling, lithium perhydroisoquinolide was added dropwise slowly into the flask, then the reaction mixture was stirred at 80° C for 3 hours, further stirred at room temperature for 12 hours. After confirming that the desired product was formed sufficiently, the precipitates were removed by filtration by using the glass filter. The resulting filtrate was purified by distillation to obtain (perhydroquinolino)(perhydroisoquinolino)dimethoxysilane. Boiling point of the desired product was 181° C/1 mmHg, and the purity was 97.0 % determined by a gas chromatography.

Further, the assignment of $^1$H-NMR was determined as follows.

δ (ppm)= 0. 85-2. 00 ($-CH_2-$+-CH-, 26. 1H, m,)
2. 45-3. 30 ($-CH_2-N-CH_2-$+$-CH_2-$N-CH-, 6.7H, m),
3. 45 ($CH_3$-O-Si, 6. 0H, s)

Next, Preparation Examples of α-olefin polymers will be described as follows.

**Preparation Examples 1-11**

(1) Preparation of solid catalyst constituent (A)

15 Millimoles of anhydrous aluminum chloride was added to 40 ml of toluene, then 15 mmol of methyltriethoxysilane was added dropwise thereto under stirring. After the completion of the dropwise addition, the mixture was reacted at 25°C for 1 hour. After, the reaction product was cooled to -5° C, then 18 ml of diisobutyl ether containing 30 mmol of butylmagnesium chloride was added dropwise to the reaction mixture under stirring, and temperature of the reaction mixture was kept at in the range of -5 to 0° C. After the completion of the dropwise addition, temperature of the reaction mixture was raised slowly, then reaction was continued at 30° C for 1 hour. The sedimented solid was separated by filtration, and washed with toluene and n-heptane. Next, 4.9 g of thus obtained solid was suspended in 30 ml of toluene, then 150 ml of titanium tetrachloride and 3.3 mmol of di-n-heptyl phthalate were added to this suspension, and reacted under stirring at 90° C for 1 hour. The solid was separated by filtration at the same temperature and washed with toluene, next with n-heptane. Again, the resulting solid was suspended in 30 ml of toluene, and 150 mmol of titanium tetrachloride was added, then reacted under stirring at 90° C for 1 hour. The solid was separated by filtration at the same temperature, and washed with toluene, next with n-heptane. The resulting solid catalyst constituent contains 3.55 % by weight of titanium. This solid was suspended in 80 ml of heptane to prepare a heptane slurry of the solid catalyst constituent.

(2) Polymerization of propylene

In an autoclave made of stainless steel having 2 liters of inside capacity being equipped with an agitator, a glass ampoule encapsulating n-heptane slurry (containing 7.9 mg of the solid catalyst constituent) of the solid catalyst constituent (A) was installed, then inside atmosphere of the autoclave was replaced sufficiently with nitrogen gas. Next, 2.1 ml of n-heptane solution containing 2.1 mmol of triethylaluminum as to the organoaluminum compound constituent (B); and 1.74 ml of n-heptane solution containing 0.35 mmol of any one of an organosilicon compound shown in Table 1 as to the organosilicon compound constituent (C) were charged into the autoclave. After introducing hydrogen gas at 0.2 MPa, 1.2 liters of liquified propylene was introduced, then the autoclave was shaked. Next, the autoclave was cooled to 10° C and the glass ampoule encapsuling the solid catalyst constituent was crushed by starting agitation, and prepolymerization was conducted for 10 minutes. Continuously, temperature of inside of the autoclave was raised to 70° C, polymerization was conducted further at 70° C for 1 hour.

After the completion of the polymerization, unreacted propylene gas was purged, resulting polymer was dried at 50° C for 20 hours under reduced pressure to obtain white powdery polypropylene. Test results relating to polymerization activity and characteristics of the individual polymers are shown in Table 3.

**Comparative Examples 1-2**

Polymerizations of propylene were conducted by a procedure similar to that of employed in Synthesis Example 11, except that each one of organosilicon compounds shown in Table 2 was used as a catalyst constituent (C). Test results relating to polymerization activity and characteristics of the individual polymers are shown in Table 3.

## Table 1

| Preparation Example No. | Constituent (C) | |
|---|---|---|
| | Name of compound | Chemical structural formula |
| 1 | Bis(perhydroisoquinolino)-dimethoxysilane | 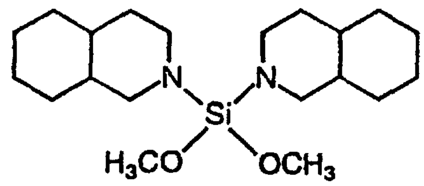 |
| 2 | Bis(perhydroquinolino)-dimethoxysilane | 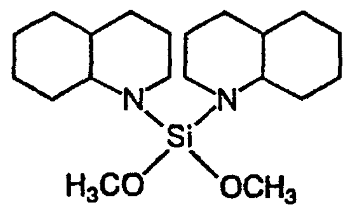 |
| 3 | Bis(1,2,3,4-tetra-hydroisoquinolino)-dimethoxysilane | 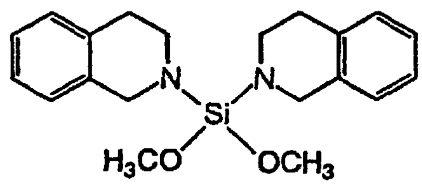 |
| 4 | Bis(1,2,3,4-tetra-hydroquinolino)-dimethoxysilane | 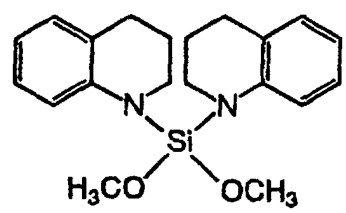 |

Table 1 (Continued)

| Preparation Example No. | Constituent (C) | |
|---|---|---|
| | Name of compound | Chemical structural formula |
| 5 | Bis(perhydroisoindolino)-dimethoxysilane | 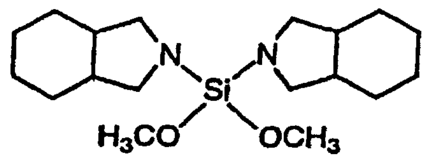 |
| 6 | Bis(perhydroindolino)-dimethoxysilane | 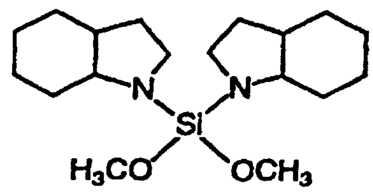 |
| 7 * | n-Propyl(perhydro-isoquinolino)-dimethoxysilane | 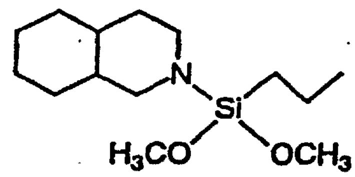 |
| 8 * | iso-Propyl(perhydro-isoquinolino)-dimethoxysilane | 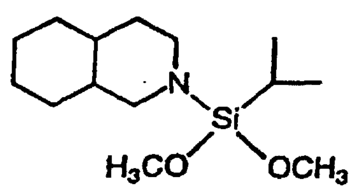 |

* not part of the invention

### Table 1 (Continued)

| Preparation Example No. | Constituent (C) | |
|---|---|---|
| | Name of compound | Chemical structural formula |
| 9 * | iso-Butyl(perhydroisoquinolino)-dimethoxysilane | 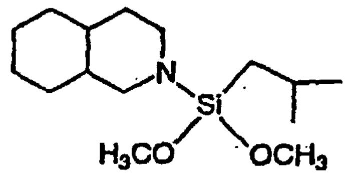 |
| 10 * | Diethylamino-(perhydroisoquinolino)-dimethoxysilane | 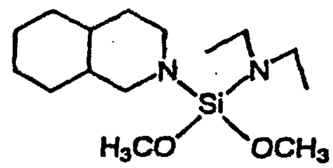 |
| 11 | (Perhydroquinolino)(perhydroisoquinolino)-dimethoxysilane | 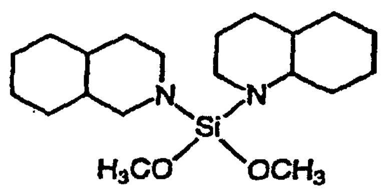 |

* not part of the invention

### Table 2

| Comparative Example No. | Constituent (C) | |
|---|---|---|
| | Name of compound | Chemical structural formula |
| 1 | Cyclohexyl(methyl)-dimethoxysilane | 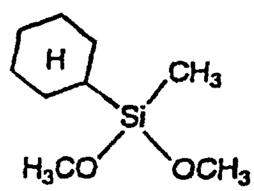 |
| 2 | Methyl(piperidino)-dimethoxysilane | 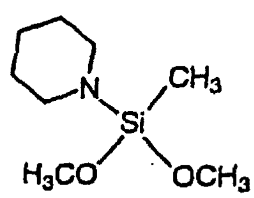 |

Table 3

| Preparation Example No. | Polymerization reaction rate (Kg/g-Cat.h) | M.F.R. (g/10min) | Tm (°C) | mmmm (%) | Mw/Mn |
|---|---|---|---|---|---|
| 1 | 36.3 | 25 | 163.9 | 97.6 | 20.4 |
| 2 | 38.0 | 49 | 164.0 | 97.8 | 18.7 |
| 3 | 42.6 | 28 | 163.8 | 98.1 | 11.2 |
| 4 | 45.3 | 95 | 163.5 | 97.5 | 10.8 |
| 5 | 42.2 | 21 | 164.7 | 98.3 | 18.5 |
| 6 | 41.2 | 41 | 164.5 | 98.4 | 17.9 |
| 7 * | 36.4 | 39 | 163.8 | 97.8 | 10.6 |
| 8 * | 37.8 | 22 | 164.3 | 98.0 | 11.5 |
| 9 * | 36.4 | 49 | 163.4 | 97.3 | 12.6 |
| 10 * | 35.1 | 71 | 163.6 | 97.5 | 12.4 |
| 11 | 37.3 | 30 | 163.9 | 97.7 | 15.2 |
| Comparative Example No. | | | | | |
| 1 | 36.8 | 39 | 162.7 | 96.5 | 6.3 |
| 2 | 29.0 | 70 | 163.9 | 97.6 | 6.4 |

* not part of the invention

**Preparation Example 12** (not part of the invention)

In an autoclave made of stainless steel having 2 liters of inside capacity being equipped with an agitator, a glass ampoule encapsulating n-heptane slurry (containing 7. 9 mg of the solid catalyst constituent) of the solid catalyst constituent (A), which was prepared similarly in Preparation Example 1, was installed, then inside atmosphere of the autoclave was replaced sufficiently with nitrogen gas. Next, 2. 1 ml of n-heptane solution containing 2.1 mmol of triethylaluminum as the organoaluminum compound constituent (B); and 1.74 ml of n-heptane solution containing 0.35 mmol of (perhydroisoquinolino)(tert-butoxy)dimethoxysilane as the organosilicon compound of constituent (C) were charged into the autoclave. After introducing hydrogen gas at pressure of 0.2 MPa, 1. 2 liters of liquified propylene was introduced, then the autoclave was shaken. Next, the autoclave was cooled to 10° C and the glass ampoule encapsulating the solid catalyst constituent was crushed by start of agitation, and prepolymerization was-conducted for 10 minutes. Continuously, inside temperature of the autoclave was raised to 70° C, further polymerization was conducted at 70° C for 1 hour.

After the completion of the polymerization, unreacted propylene gas was purged, resulting polymer was dried at 50° C for 20 hours under reduced pressure to obtain white powdery polypropylene. Results of determinations relating

to polymerization activity and characteristics of the polymers are shown in Table 4.

**Comparative Example 3**

Polymerization of propylene was conducted by a procedure similar to that employed in Preparation Example 12, except that methyl(perhydroisoquinolino)dimethoxysilane was used as the catalyst constituent (C), in place of (perhydroisoquinolino)(tert-butoxy)dimethoxysilane.

Table 4

| Examples | Polymerization reaction rate (kg/g-Cat. -hr) | M.F.R. (g/10 min.) | Tm (°C) | mmmm (%) | Mw/Mn |
|---|---|---|---|---|---|
| Preparation Example 12 | 34.8 | 66 | 162. 9 | 97.4 | 10.9 |
| Comparative Example 3 | 30. 4 | 57 | 162.7 | 97.4 | 7.8 |

Next, preparation examples in gas-phase polymerization will be explained

**Preparation Example 13**

(1) Preparation of treated catalyst for prepolymerization

Atmosphere in a separable flask of 500 ml capacity having a glass filter was replaced with nitrogen gas, then 250 ml of distilled·anhydrous n-heptane was poured, and 3.25 mmol of triethylaluminum as the catalyst constituent (B), 0.54 mmol of (perhydroisoquinolino)dimethoxysilane as the catalyst constituent (C) were charged, and the mixture was stirred at 10° C for 5 minutes. Next, propylene gas was introduced into the flask for 5 minutes at the flow speed of 0.3 Nl/min and continued for 5 minutes. Then 1 g of solid catalyst constituent (A), which was prepared similarly as in Preparation Example 1, was charged in the flask and conducted prepolymerization at 10° C for 10 minutes. After the completion of the prepolymerization, the reaction mixture was subjected to filtration and the resulting solid material was washed 3 times with 100 ml of distilled·dehydrated n-butane, and dried under reduced pressure to obtain prepolymerized treated solid. The obtained prepolymerized treated solid contains 5 g of polypropylene polymerized on the basis of 1 g of the solid catalyst constituent.

(2) Polymerization of propylene

Atmosphere in a polymerization vessel made of stainless steel of 2 liters inside capacity, mantled with jacket was replaced sufficiently with nitrogen gas, then Flowbeads (CL12007) (manufactured by Sumitomo Seika Chemicals Co., Ltd.) was introduced as the bed-powder. Next, 6 mmol of triethylaluminum as the catalyst constituent (B), 1 mmol of bis(perhydroisoquinolino)dimethoxysilane as the catalyst constituent (C) were introduced in this order, after the reaction mixture was heated to 70° C, hydrogen gas as the chain transfer agent was charged at the pressure of 0.03 MPa, and propylene gas was charged at the pressure of 0.45 MPa into the vessel. After that, a glass ampoule encapsulating 65 mg of the above mentioned prepolymerized treated solid, previously placed in the vessel, was crushed by start of polymerization, and the polymerization was conducted at 70° C for 1 hour. During the polymerization, the pressure of propylene was kept at 0.45 MPa. After the completion of the polymerization, unreacted propylene gas was purged, and the resulting polymer was dried at 50° C for 20 hours under reduced pressure to obtain white powdery polypropylene. Determination results of the polymerization activities and characteristics of the polymers are shown in Tables 5 and 6.

**Preparation Example 14**

Propylene was polymerized by procedures similar to those of employed in Preparation Example 13, except that polymerization was conducted at 82° C. Determination results of the polymerization activities and characteristics of the polymers are shown in Tables 5 and 6.

**Preparation Example 15**

In preparation of the treated solid for prepolymerization and polymerization of propylene, procedures similar to those employed in Preparation Example 13 were conducted except that bis(perhydroquinolino)dimethoxysilane was used in place of bis(perhydroisoquinolino)dimethoxysilane as the catalyst constituent (C). Determination results of the

polymerization activities and characteristics of the polymers are shown in Tables 5 and 6.

**Preparation Example 16**

Propylene was polymerized by procedure similar to that of employed in Preparation Example 13, except that polymerization was conducted at 82° C. Determination results of the polymerization activities and characteristics of the polymers are shown in Tables 5 and 6.

**Preparation Example 17**

(1) Preparation of solid catalyst constituent (A)

Into a flask installed with a dropping funnel, a glass filter and a stirrer, 3 g of silicon oxide (prepared by under nitrogen gas stream, calcinated silicon oxide of tradename T6-20420 (manufactured by Fuji Davidson & Co.) at 200° C for 2 hours, further calcinated at 70° C for 5 hours.), 30 ml of diisopropyl ether, 16 mmol of tert-butylmagnesium chloride, and 16 mmol of tert-butyl chloride were charged, thereafter the mixture was stirred at 23° C for 2 hours. The liquid phase of the reaction mixture was removed, and dried by heating at 60° C for 1 hour, continuously dried at 60° C for 1 hour under reduced pressure to obtain 4.3 g of carrier.

Next, into a flask being installed similar to the above flask, 3 g of the carrier, 40 ml of toluene, 136 mmol of titanium tetrachloride, 1. 5 mmol of di-n-butyl phthalate were charged in this order, and the resulting mixture was reacted at 90° C for 1 hour. After the completion of the reaction, the reaction mixture was subjected to filtration, and the solid matter thus obtained was washed 5 times with 30 ml of toluene. Further, 40 ml of toluene and 136 mmol of titanium tetrachloride were added, and again reacted at 90° C for 1 hour, then the reaction mixture was subjected to filtration, the resulting solid was washed 2 times with toluene, 5 times with n-heptane, and dried at 23° C for 2 hours under reduced pressure to obtain 3 g of solid catalyst. The content of titanium in the solid catalyst was 3.88 % by weight.

(2) Polymerization of propylene

Atmosphere in a polymerization vessel made of stainless steel of 2 liters inside capacity, mantled with jacket was replaced sufficiently with nitrogen gas, then Flowbeads (CL12007) (manufactured by Sumitomo Seika Chemicals Co., Ltd.) was introduced as the bed-powder. Next, 6 mmol of triethylaluminum as the catalyst constituent (B), 1 mmol of bis(perhydroisoquinolino)dimethoxysilane as the catalyst constituent (C) were introduced in this order, after temperature of the reaction mixture was raised to 70° C, hydrogen gas as the chain transfer agent was charged at a pressure of 0.03 MPa, and propylene gas was charged at a pressure of 0.45 MPa into the vessel. After that, a glass ampoule encapsulating 110 mg of the above mentioned catalyst solid, previously placed in the vessel, was crushed by start of polymerization, and the polymerization was conducted at 70° C for 1 hour. During the polymerization, the pressure of propylene was kept at 0.45 MPa. After the completion of the polymerization, unreacted propylene gas was purged, and the resulting polymer was dried at 50° C for 20 hours under reduced pressure and obtained white powdery polypropylene. Determination results of the polymerization activities and characteristics of the polymers are shown in Tables 5 and 6.

**Preparation Example 18**

Propylene was polymerized by procedures similar to those of employed in Preparation Example 17, except that polymerization was conducted at 82° C. Determination results of the polymerization activities and characteristics of the polymers are shown in Tables 5 and 6.

**Comparative Example 4**

In preparation of the treated solid for prepolymerization and polymerization of propylene, procedures similar to those employed in Preparation Example 13 were conducted except that cyclohexyldimethoxysilane was used in place of bis(perhydroisoquinolino)dimethoxysilane as the catalyst constituent (C). Determination results of the polymerization temperature, polymerization activity and characteristics of the polymers are shown in Tables 5 and 6.

**Comparative Example 5**

Propylene was polymerized by procedures similar to those of employed in Comparative Example 4, except that polymerization was conducted at 82° C. Determination results of the polymerization activity and characteristics of

the polymer are shown in Tables 5 and 6.

**Comparative Example 6**

Propylene was polymerized by procedures similar to those of employed in Preparation Example 16, except that cyclohexylmethyldimethoxysilane was used in place of bis(perhydroisoquinolino)-dimethoxysilane. Determination results of the polymerization activity and characteristics of the polymers are shown in Tables 5 and 6.

**Comparative Example 7**

Propylene was polymerized by procedures similar to those of employed in Comparative Example 6, except that polymerization was conducted at 82° C. Determination results of the polymerization activity and characteristics of the polymer are shown in Tables 5 and 6.

Table 5

| Preparation Example No. | Constituent (C) | Polymerization temperature (°C) | Polymerization reaction rate (Kg/g-hr) |
|---|---|---|---|
| 13 | Bis(perhydroisoquinolino) dimethoxysilane | 70 | 1.83 |
| 14 | Bis(perhydroisoquinolino) dimethoxysilane | 82 | 2.18 |
| 15 | Bis(perhydroquinolino) dimethoxysilane | 70 | 1.75 |
| 16 | Bis(perhydroquinolino) dimethoxysilane | 82 | 2.08 |
| 17 | Bis(perhydroisoquinolino) dimethoxysilane | 70 | 0.47 |
| 18 | Bis(perhydroisoquinolino) dimethoxysilane | 82 | 0.77 |
| Comparative Example No. | | | |
| 4 | Cyclohexylmethyl-dimethoxysilane | 70 | 1.89 |
| 5 | Cyclohexylmethyl-dimethoxysilane | 82 | 2.07 |
| 6 | Cyclohexylmethyl-dimethoxysilane | 70 | 0.52 |
| 7 | Cyclohexylmethyl-dimethoxysilane | 82 | 0.80 |

Table 6

| Preparation Example No. | Constituent (C) | M.F.R. (g/10min) | Tm (°C) | mmmm (%) | Mw/Mn |
|---|---|---|---|---|---|
| 13 | Bis(perhydroisoquinolino) dimethoxysilane | 25.9 | 163.5 | 97.4 | 16.8 |
| 14 | Bis(perhydroisoquinolino) dimethoxysilane | 15.7 | 164.1 | 98.3 | 15.8 |
| 15 | Bis(perhydroquinolino) dimethoxysilane | 42.9 | 163.3 | 97.5 | 15.9 |
| 16 | Bis(perhydroquinolino) dimethoxysilane | 55.6 | 163.5 | 98.2 | 14.7 |
| 17 | Bis(perhydroisoquinolino) dimethoxysilane | 54.6 | 162.3 | 97.4 | 13.8 |

Table 6 (continued)

| Preparation Example No. | Constituent (C) | M.F.R. (g/10min) | Tm (°C) | mmmm (%) | Mw/Mn |
|---|---|---|---|---|---|
| 18 | Bis(perhydroisoquinolino) dimethoxysilane | 32.0 | 162.6 | 97.7 | 13.2 |
| Comparative Example No. | | | | | |
| 4 | Cyclohexylmethyl-dimethoxysilane | 33.6 | 162.5 | 96.8 | 5.9 |
| 5 | Cyclohexylmethyl-dimethoxysilane | 42.2 | 162.5 | 97.0 | 5.0 |
| 6 | Cyclohexylmethyl-dimethoxysilane | 53.2 | 162.0 | 96.5 | 5.2 |
| 7 | Cyclohexylmethyl-dimethoxysilane | 64.5 | 161.8 | 96.6 | 4.7 |

Next, Preparation Examples of copolymers are shown as follows.

**Preparation Example 19**

(1) Preparation of solid catalyst constituent (A)

15 Millimoles of anhydrous aluminum chloride was added to 40 ml of toluene, then 15 mmol of methyltriethoxysilane was added dropwise thereto under stirring, after finished the addition dropwise, the mixture was reacted at 25° C for 1 hour. After the reaction product was cooled to -5° C, then 18 ml of diisobuthyl ether containing 30 mmol of butylmagnesium chloride was added dropwise to the reaction mixture under stirring, and temperature of the reaction mixture was kept at in the range of -5 to 0° C. After the completion of the dropwise addition, temperature of the reaction mixture was raised slowly, then reaction was continued at 30° C for 1 hour. The sedimented solid was separated by filtration, and washed with toluene and next with n-heptane. Further the solid was again suspended in 30 ml of toluene, then 150 mmol of titanium tetrachloride was added then reacted under stirring at 90° C for 1 hour. The solid was separated by filtration at the same temperature, and washed with toluene, next with n-heptane. The resulting solid catalyst constituent contains 3.55 % by weight of titanium. This solid was suspended in 80 ml of heptane to prepare heptane slurry of the solid catalyst constituent.

(2) Prepolymerization

In an autoclave made of stainless steel having 2 liters of inside capacity being equipped with an agitator, in nitrogen gas atmospher, 2.7 ml (2.7 mmol) of n-hexane solution of triethylaluminum as the catalyst constituent (B), 4.5 ml (0.45 mmol) of n-heptane solution containing bis(perhydroisoquinolino)dimethoxysilane, and 1 kg/cm$^2$ gauge pressure of hydrogen gas were introduced, then 900 ml of liquified propylene was charged. Next, the autoclave was transferred in a thermostat water bath of 10° C, and agitation was started. 10 Minutes after the agitation, 9.1 mg of the solid catalyst constituent (A) (content of Ti=3.55% by weight) prepared by the above (1) being encapsuled previously was added and prepolymerization was conducted at 10° C for 10 minutes.

(3) Single bulk polymerization of propylene

After the completion of the prepolymerization, the autoclave was immediately transferred in a thermostat chamber for the main polymerization, after temperature of the autoclave was raised to set at 60° C in 6 minutes, and propylene was homopolymerized at the same temperature for 50 minutes. After the completion of the polymerization, unreacted propylene gas was purged outside of the reaction system, after the inside of the autoclave was sufficiently replaced with nitrogen gas, and the inside pressure was kept at 0.2 kg/cm$^2$ of gauge, and obtained 149. 4 g of polymer. For analysis, 31.4 g of the polymer was sampled.

(4) Copolymerization of ethylene and propylene (gas-phase polymerization)

Into an autoclave, inside of which was kept to 0.2 kg/cm$^2$ of gauge pressure and the temperature was set at

40° C, a mixed gas of ethylene and propylene, having ratio of 1:2 by volume, was supplied continuously (respectively, 100 Ncc/min and 200 Ncc/min), and the copolymerization pressure was regulated to 2 kg/cm$^2$ of guage pressure. In conducting copolymerization at the same temperature and pressure for 4 hours, unreacted gases were purged from the reaction system to keep the polymerization pressure to 2 kg/cm$^2$ of guage and copolymerization was condected at 40° C for 4 hours.

The copolymer obtained was dried at 60° C for 20 hours under reduced pressure. By measuring the weight of copolymer and the yield was 10.1 g.

(Preparation of the rubber component)

Five grammes of the above obtained ethylene-propylene copolymer was weighted precisely and transfered into a vessel containing 500 ml of p-xylene, then the copolymer was dissolved by heating. Next, the solution was kept as it was overnight at room temperature. The solution obtained by centrifugal separation to remove the deposited solid was transferred into 1000 ml of acetone, and allowed to stand for 1 hour at room temperature under stirring. Deposited rubber-like solid was taken by a glass filter, dried at 60° C for 20 hours under reduced pressure to obtained rubber-like component. Polymerization conditions, polymerization results and characteristics of the copolymers are shown in Tables 7-11.

**Eaxmples 20-22**

Copolymerizations were conducted by procedure similar to that of employed in Preparation Example 19, except that polymerization conditions shown in Table 7 were used.

Polymerization results and characteristics of the copolymers obtained are shown in Tables 8-11.

**Comparative Examples 8-10**

Copolymerizations were conducted by procedure similar to that of employed in Preparation Example 1, except that diisopropyldimethoxysilane (DIPDMS) was used as the catalyst component (C) and polymerization condition as shown in Table 7 was used

Polymerization results and characteristics of the copolymers obtained are shown in Tables 8-11.

Table 7

| Preparation Example No. | First step polymerization temperature (°C) | Hydrogen gas charging pressure (Kg/cm$^2$) | Second step polymerization temperature (°C) |
|---|---|---|---|
| 19 | 60 | 1.0 | 40 |
| 20 | 60 | 1.0 | 60 |
| 21 | 60 | 7.0 | 40 |
| 22 | 74 | 7.0 | 40 |
| Comparative Example No. | | | |
| 8 | 60 | 1.0 | 40 |
| 9 | 60 | 7.0 | 40 |
| 10 | 74 | 7.0 | 40 |

Table 8

| Preparation Example No. | First step polymerization reaction rate (g-PP/g-Cat. h) | Second step copolymerization reaction rate (g-Copo/g-Cat.h) | Content of block copolymer (wt%) |
|---|---|---|---|
| 19 | 19700 | 330 | 7.9 |
| 20 | 19700 | 780 | 16.0 |
| 21 | 23300 | 240 | 4.6 |
| 22 | 43800 | 210 | 2.2 |

Table 8 (continued)

| Preparation Example No. | First step polymerization reaction rate (g-PP/g-Cat. h) | Second step copolymerization reaction rate (g-Copo/g-Cat.h) | Content of block copolymer (wt%) |
|---|---|---|---|
| Comparative Example No. | | | |
| 8 | 25500 | 480 | 8.3 |
| 9 | 32600 | 400 | 5.0 |
| 10 | 70300 | 340 | 2.3 |

Table 9

| First step polymer | | | | |
|---|---|---|---|---|
| (Product before removal of ashes) | | | | |
| Preparation Example No. | HI (%) | mmmm (%) | M.F.R. (g/10min) | Mw/Mn |
| 19 | 96.4 | 96.4 | 5.1 | 20.6 |
| 20 | 96.4 | 96.4 | 5.1 | 20.6 |
| 21 | 92.9 | 97.1 | 76.1 | 18.7 |
| 22 | 95.5 | 97.8 | 52.9 | 16.8 |
| Comparative Example No. | | | | |
| 8 | 97.4 | 96.9 | 6.1 | 10.7 |
| 9 | 94.1 | 97.3 | 121.1 | 11.7 |
| 10 | 96.2 | 97.7 | 121.1 | 9.1 |

Table 10

| Block copolymer | | | |
|---|---|---|---|
| (Product before removal of ashes) | | | |
| Preparation Example No. | HI (%) | Ethylene content (wt%) | Mw/Mn |
| 19 | 94.0 | 3.50 | 24.9 |
| 20 | 89.8 | 4.19 | 41.1 |
| 21 | 91.8 | 2.36 | 36.0 |
| 22 | 95.2 | 0.94 | 17.7 |
| Comparative Example No. | | | |
| 8 | 95.4 | 2.85 | 18.9 |
| 9 | 92.7 | 1.92 | 28.0 |
| 10 | 95.9 | 0.64 | 13.4 |

Table 11

| Second step rubber component | |
|---|---|
| Preparation Example No. | Intrinsic viscosity [η] |
| 19 | 5.9 |
| 20 | 5.4 |
| 21 | 6.4 |
| 22 | 6.0 |

Table 11 (continued)

| Second step rubber component | |
|---|---|
| Comparative Example No. | |
| 8 | 8.2 |
| 9 | 8.0 |
| 10 | 8.1 |

**Preparation Example 23**

In an autoclave made of stainless steel, having 2 liters of inside capacity being equipped with an agitator, a glass ampoule encapsulating n-heptane slurry (containing 7.9 mg of the solid catalyst constituent) of the solid catalyst constituent (A), which was prepared by the method similar to that employed in Preparation example 1, was installed, then inside atmosphere of the autoclave was replaced sufficiently with nitrogen gas. Next, 2.1 ml of n-heptane solution containing 2. mmol of triethylaluminum as to the organoaluminum compound constituent (B); and 1.74 ml of n-heptane solution containing 0.35 mmol of bis(perhydro-indolino)dimethoxysilane as to the organosilicon compound constituent (C) were charged into the autoclave. After introduced hydrogen gas at pressure of 0.2 MPa, 1.2 liters of liquified propylene was introduced, then the autoclave was shaken. Next, the autoclave was cooled to 10° C and the glass ampoule encapsuling the solid catalyst constituent was crushed by start of agitation, and prepolymerization was conducted for 10 minutes. Continuously, temperature of inside of the autoclave was raised to 70°C, further conducted polymerization at 70° C for 1 hour.

After the completion of the polymerization, unreacted propylene gas was purged from the autoclave, and resulting polymer was dried at 20° C for 20 hours under reduced pressure to obtain white powdery polypropylene. Test results relating to the polymerization activity and characteristics of the individual polymers are shown in Tables 12 and 13.

**Example 24**

Propylene was polymerized by the procedure similar to that of employed in Preparation Example 23, except that bis(perhydroquinolino) dimethoxysilane was used as the catalyst constituent (C) in place of bis(perhydroindolino)-dimethoxysilane. Determination results relating to the polymerization activity and characteristics of the polymer are shown in Tables 12 and 13.

**Example 25**

Propylene was polymerized by the procedure similar to that of employed in Preparation Example 23, except that the hydrogen gas was introducd at 1 MPa of pressure in place of 0.7 MPa pressure, and bis(perhydroisoindolino) dimethoxysilane was used as the catalyst constituent (C) in place of bis(perhydroindolino)dimethoxysilane. Determination results relating to the polymerization activity and characteristics of the polymer are shown in Tables 12 and 13.

**Example 26**

Propylene was polymerized by the procedure similar to that of employed in Preparation Example 23, except that the hydrogen gas was introducd at 1 MPa of pressure in place of 0.7 MPa pressure, and bis(perhydroisoquinolino) dimethoxysilane was used as the catalyst constituent (C) in place of bis(perhydroindolino)dimethoxysilane. Determination results relating to the polymerization activity and characteristics of the polymer are shown in Tables 12 and 13.

**Comparative Example 11**

Propylene was polymerized by the procedure similar to that of employed in Preparation Example 23, except that cyclohexylmethyldimethoxysilane was used as the catalyst constituent (C) in place of bis(perhydroindolino)dimethoxysilane. Determination results relating to the polymerization activity and characteristics of the polymer are shown in Tables 12 and 13.

Table 12

| Preparation Example No. | Polymerization reaction rate (Kg/g-hr) | M.F.R. (g/10min) | Tm (°C) | mmmm (%) | Mw $\times 10^{-4}$ | Mw/Mn |
|---|---|---|---|---|---|---|
| 23 | 40.1 | 284 | 162.6 | 98.0 | 18.2 | 15.2 |
| 24 | 36.3 | 249 | 162.7 | 98.3 | 19.0 | 13.9 |
| 25 | 41.5 | 249 | 162.6 | 98.1 | 19.2 | 16.6 |
| 26 | 34.2 | 249 | 162.8 | 98.3 | 18.3 | 15.8 |
| Comparative Example No. | | | | | | |
| 11 | 35.7 | 284 | 161.7 | 96.8 | 16.7 | 5.8 |

Table 13

| Preparation Example No. | Modulus in bending (MPa) | Thermal deformation temperature(0.45MPa) ( °C) |
|---|---|---|
| 23 | 2,110 | 138 |
| 24 | 2,150 | 138 |
| 25 | 2,190 | 139 |
| 26 | 2,200 | 139 |
| Comparative Example No. | | |
| 11 | 1,780 | 133 |

**Claims**

1. A method for preparing an α-olefin polymer by polymerizing an α-olefin in the presence of a catalyst containing the following catalyst constituents (A), (B) and (C):

   (A)a solid catalyst constituent containing magnesium, titanium, a halogen element and an electron donor indispensably,
   (B) an organoaluminum compound, and
   (C)an aminosilane compound represented by the following general formula(1):

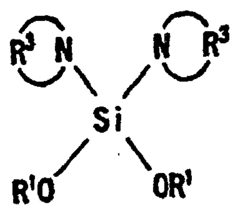

(1)

   (wherein $R^1$ is a hydrocarbyl group having 1 to 8 carbon atoms; and

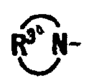

   is a polycyclic amino group having 7 to 40 of carbon atoms which form the polycyclic skeleton bonded with the nitrogen atom).

2. The method according to Claim 1, wherein the α-olefin is propylene, 1-butene, 1-hexene, 1-methylpentene, or 1-octene.

**3.** The method according to Claim 1, wherein ratio of the amount of silicon atom of the catalyst constituent (C) against the amount of aluminium atom of the catalyst constituent (B) is 0.01 to 1.0 in terms of atomic ratio (Si/Al).

**4.** The method according to Claim 1, wherein the catalyst constituent (C) is bis(perhydroisoquinolino)dimethoxysilane, bis(perhydroquinolino)dimethoxysilane, bis(perhydroisoindolino)dimethoxysilane, bis(perhydroindolino)dimethoxysilane, or (perhydroquinolino)(perhydroisoquinolino)dimethoxysilane.

**5.** The method according to Claim 1, wherein the polymerization of an α-olefin is conducted in gaseous state.

**6.** A method for preparing propylene block copolymer which comprises:

(1) a step for preparing a crystalline propylene polymer containing 10 % by weight or less of α-olefin by polymerizing propylene or propylene with an α-olefin other than propylene, and
(2) a step for preparing a rubber-like propylene copolymer containing 10 - 40 % by weight of α-olefin by polymerizing propylene with an α-olefin other than propylene,

in the presence of a catalyst containing the following catalyst constituents (A), (B) and (C):

(A)a solid catalyst constituent containing magnesium, titanium, a halogen element and an electron donor indispensably,
(B) an organoaluminum compound, and
(C) an aminosilane compound represented by the following general formula (1):

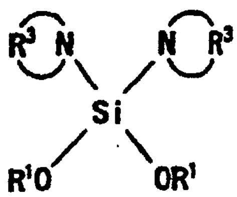

(1)

(wherein $R^1$ is a hydrocarbyl group having 1 to 8 carbon atoms; and

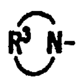

is a polycyclic amino group having 7 to 40 of carbon atoms which form the polycyclic skeleton bonded with the nitrogen atom).

**7.** The method according to Claim 6, wherein the step (2) is a gas-phase copolymerization of propylene with an α-olefin other than propylene without deactivating the catalyst consequently after the polymerization of propylene or propylene with an α-olefin other than propylene in the step (1).

**8.** The method according to Claim 6, wherein the content of a rubber-like propylene copolymer with an α-olefin other than propylene in the propylene block copolymer is 3 to 40 % by weight.

**9.** The method acccording to Claim 6, wherein the α-olefin other than propylene is ethylene, butene-1, 3-methylbutene-1, 3-methylpentene-1, 4-methylpentene-1, hexene-1, 4-methylhexene-1, octene-1, styrene, 2-methylstyrene, 3-methylstyrene, cyclopentene, cyclohexene or cyclopentadiene.

**10.** An aminosilane compound represented by the following general formula (1):

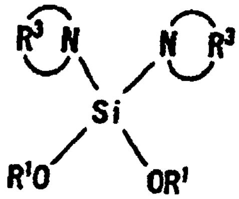

(1)

(wherein $R^1$ is a hydrocarbyl group having 1 to 8 carbon a toms; and

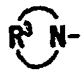

is a polycyclic amino group having 7 or more of carbon atoms which form the polycyclic skeleton bonded with the nitrogen atom).

**11.** The silane compound according to Claim 10, wherein $R^1$ is methyl group; and

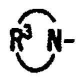

is perhydroisoquinolino group, perhydroquinolino group, perhydroisoindolino group or perhydroindolino group.

**12.** The aminosilane compound according to Claim 10, wherein the compound represented by the general formula (1) is bis(perhydroisoquinolino)dimethoxysilane, bis(perhydroquinolino)dimethoxysilane, bis(perhydroisoindolino) dimethoxysilane, bis(perhydroindolino)dimethoxysilane, or (perhydroquinolino)(perhydroisoquinolino)-dimethoxysilane.

**Patentansprüche**

**1.** Verfahren zur Herstellung eines α-Olefinpolymers durch Polymerisation eines α-Olefins in Gegenwart eines Katalysators, der die folgenden Katalysatorkomponenten (A), (B) und (C) enthält:

(A) eine feste Katalysatorkomponente, die zwingend Magnesium, Titan, ein Halogen und einen Elektronendonor enthält,
(B) eine Organoaluminiumverbindung und
(C) eine Aminosilanverbindung gemäß der folgenden allgemeinen Formel (1):

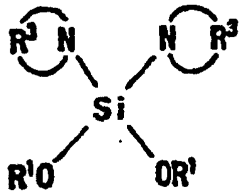

(1)

(worin $R^1$ für einen Kohlenwasserstoffrest mit 1 bis 8 Kohlenstoffatomen steht; und

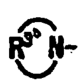

für eine polycyclische Aminogruppe mit 7 bis 40 Kohlenstoffatomen steht, die das an das Stickstoffatom gebundene polycyclische Gerüst bilden).

**2.** Verfahren nach Anspruch 1, wobei es sich bei dem α-Olefin um Propylen, 1-Buten, 1-Hexen, 1 Methylen oder 1-Octen handelt.

**3.** Verfahren nach Anspruch 1, wobei das Verhältnis der Menge der Siliziumatome der Katalysatorkomponenten (C) zur Menge der Aluminiumatome der Katalysatorkomponente (B) 0,01 bis 1,0, ausgedrückt als Atomverhältnis Si/Al, beträgt.

**4.** Verfahren nach Anspruch 1, wobei es sich bei der Katalysatorkomponente (C) um Bis(perhydroisochinolino)dimethoxysilan, Bis(perhydrochinolino)-dimethoxysilan), Bis(perhydroisoindolino)dimethoxysilan, Bis(perhydroindolino) dimethoxysilan) oder (Perhydrochinolino)(perhydroisochinolino)dimethoxysilan handelt.

**5.** Verfahren nach Anspruch 1, wobei die Polymerisation eines α-Olefins im gasförmigen Zustand erfolgt.

**6.** Verfahren zur Herstellung eines Propylenblockcopolymers, das umfasst:

(1) einen Schritt zur Herstellung eines kristallinen Propylenpolymers, das höchstens 10 Gew.-% eines α-Olefins enthält, indem man Propylen oder Propylen mit einem vom Propylen verschiedenen α-Olefin polymerisiert, und
(2) einen Schritt zur Herstellung eines kautschukartigen Propylencopolymers, das 10 bis 40 Gew.-% eines α-Olefins enthält, indem man Propylen mit einem von Propylen verschiedenen α-Olefin polymerisiert,

in Gegenwart eine Katalysators, der die folgenden Katalysatorkomponenten (A), (B) und (C) enthält:

(A) eine feste Katalysatorkomponente, die zwingend Magnesium, Titan, ein Halogen und einen Elektronendonor enthält,
(B) eine Organoaluminiumverbindung und
(C) eine Aminosilanverbindung gemäß der folgenden allgemeinen Formel (1):

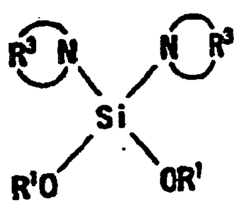

(1)

(worin $R^1$ für einen Kohlenwasserstoffrest mit 1 bis 8 Kohlenstoffatomen steht; und

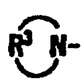

für eine polycyclische Aminogruppe mit 7 bis 40 Kohlenstoffatomen steht, die das an das Stickstoffatom gebundene polycyclische Gerüst bilden).

**7.** Verfahren nach Anspruch 6, wobei der Schritt (2) eine Gasphasencopolymerisation von Propylen mit einem von Propylen verschiedenen α-Olefin ohne Deaktivierung des Katalysators im Anschluss an die Polymerisation von Propylen oder Propylen mit einem von Propylen verschiedenen α-Olefin im Schritt (1) ist.

**8.** Verfahren nach Anspruch 6, wobei der Gehalt des kautschukartigen Propylencopolymers mit einem von Propylen verschiedenen α-Olefin im Propylenblockcopolymer 3 bis 40 Gew.-% beträgt.

**9.** Verfahren nach Anspruch 6, wobei es sich bei dem vom Propylen verschiedenen α-Olefin um Ethylen, Buten-1,

3-Methylbuten-1, 3-Methylpenten-1, 4-Methylpenten-1, Hexen-1, 4-Methylhexen-1, Octen-1, Styrol, 2-Methylstyrol, 3-Methylstyrol, Cyclopenten, Cyclohexen oder Cyclopentadien handelt.

**10.** Aminosilanverbindung der folgenden allgemeinen Formel (1):

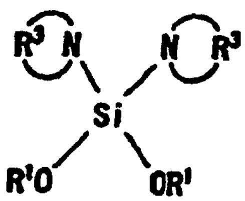

(1)

(worin $R^1$ für einen Kohlenwasserstoffrest mit 1 bis 8 Kohlenstoffatomen steht; und

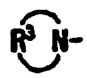

für eine polycyclische Aminogruppe mit 7 bis 40 Kohlenstoffatomen steht, die das an das Stickstoffatom gebundene polycyclische Gerüst bilden).

**11.** Silanverbindung nach Anspruch 10, wobei $R^1$ für eine Methylgruppe steht; und

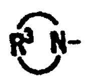

für eine Perhydroisochinolinogruppe, Perhydrochinolinogruppe, Perhydroisoindolinogruppe oder Perhydroindolinogruppe steht.

**12.** Aminosilanverbindung nach Anspruch 10, wobei es sich bei der Verbindung gemäß der allgemeinen Formel (1) um Bis(perhydroisochinolino)dimethoxysilan, Bis(perhydrochinolino)dimethoxysilan, Bis(perhydroisoindolino)dimethoxysilan, Bis(perhydroindolino)dimethoxysilan oder (Perhydrochinolino)-(perhydroisochinolino)dimethoxysilan handelt.

## Revendications

**1.** Procédé de préparation d'un polymère d'α-oléfine par polymérisation d'une α-oléfine en présence d'un catalyseur contenant les constituants de catalyseur (A), (B) et (C) suivants :

(A) un constituant solide de catalyseur contenant du magnésium, du titane, un élément halogène et un donneur d'électrons obligatoirement,
(B) un composé organoaluminium, et
(C) un composé aminosilane représenté par la formule générale (1) suivante :

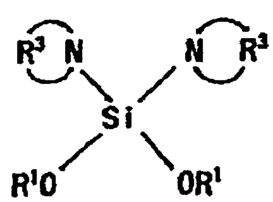

(1)

(dans laquelle $R^1$ représente un groupe hydrocarbyle ayant de 1 à 8 atomes de carbone ; et

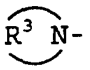

représente un groupe amino polycyclique ayant de 7 à 40 atomes de carbone qui forment le squelette polycyclique en se liant à l'atome d'azote).

**2.** Procédé selon la revendication 1, dans lequel l'α-oléfine est le propylène, le 1-butène, le 1-hexène, le 1-méthylpentène ou le 1-octène.

**3.** Procédé selon la revendication 1, dans lequel le rapport de la quantité d'atome de silicium du constituant de catalyseur (C) à la quantité d'atome d'aluminium du constituant de catalyseur (B) est de 0,01 à 1,00 en termes de rapport atomique (Si/Al).

**4.** Procédé selon la revendication 1, dans lequel le constituant de catalyseur (C) est le bis(perhydroisoquinoléino) diméthoxysilane, le bis (perhydroquinoléino)diméthoxysilane, le bis(perhydroisoindolino)diméthoxysilane, le bis (perhydroindolino)diméthoxysilane, ou le (perhydroquinoléino) (perhydroisoquinoléino)diméthoxysilane.

**5.** Procédé selon la revendication 1, dans lequel la polymérisation d'une α-oléfine est conduite à l'état gazeux.

**6.** Procédé de préparation d'un copolymère bloc de propylène qui comprend :

(1) une étape consistant à préparer un polymère cristallin de propylène contenant 10 % en poids ou moins d'une α-oléfine en polymérisant du propylène ou du propylène avec une α-oléfine autre que le propylène, et
(2) une étape consistant à préparer un copolymère de propylène de type caoutchouc contenant de 10 à 40 % en poids d'une α-oléfine en polymérisant du propylène avec une α-oléfine autre que le propylène,

en présence d'un catalyseur contenant les constituants de catalyseur (A), (B) et (C) suivants :

(A) un constituant solide de catalyseur contenant du magnésium, du titane, un élément halogène et un donneur d'électrons obligatoirement,
(B) un composé organoaluminium, et
(C) un composé aminosilane représenté par la formule générale (1) ci-dessous :

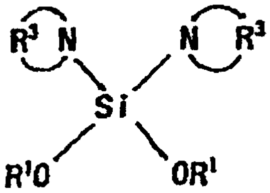

(1)

(dans laquelle $R^1$ représente un groupe hydrocarbyle ayant de 1 à 8 atomes de carbone ; et

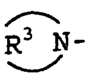

représente un groupe amino polycyclique ayant de 7 à 40 atomes de carbone qui forment le squelette polycyclique en se liant à l'atome d'azote).

**7.** Procédé selon la revendication 6, dans lequel l'étape (2) est une copolymérisation en phase gazeuse de propylène avec une α-oléfine autre que le propylène sans désactiver le catalyseur après la polymérisation du propylène ou du propylène avec une α-oléfine autre que le propylène à l'étape (1).

**8.** Procédé selon la revendication 6, dans lequel la teneur en copolymère de propylène de type caoutchouc avec

une α-oléfine autre que le propylène dans le copolymère bloc de propylène est de 3 à 40 % en poids.

**9.** Procédé selon la revendication 6, dans lequel l'α-oléfine autre que le propylène est l'éthylène, le butène-1, le 3-méthylbutène-1, le 3-méthylpentène-1, le 4-méthylpentène-1, l'hexène-1, le 4-méthylhexène-1, l'octène-1, le styrène, le 2-méthylstyrène, le 3-méthylstyrène, le cyclopentène, le cyclohexène ou le cyclopentadiène.

**10.** Composé aminosilane représenté par la formule générale (1) suivante :

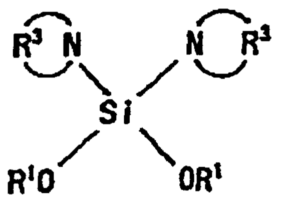

(1)

(dans laquelle $R^1$ représente un groupe hydrocarbyle ayant de 1 à 8 atomes de carbone ; et

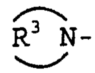

représente un groupe amino polycyclique ayant 7 atomes de carbone ou plus qui forment le squelette polycyclique en se liant à l'atome d'azote).

**11.** Composé silane selon la revendication 10, dans lequel $R^1$ représente un groupe méthyle ; et

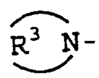

représente un groupe perhydroisoquinoléino, un groupe perhydroquinoléino, un groupe perhydroisoindolino ou un groupe perhydroindolino.

**12.** Composé aminosilane selon la revendication 10, dans lequel le composé représenté par la formule générale (1) est le bis(perhydroisoquinoléino)diméthoxysilane, le bis(perhydroquinoléino)diméthoxysilane, le bis(perhydroisoindolino)diméthoxysilane, le bis(perhydroindolino)diméthoxysilane, ou le (perhydroquinoléino) (perhydroisoquinoléino)diméthoxysilane.

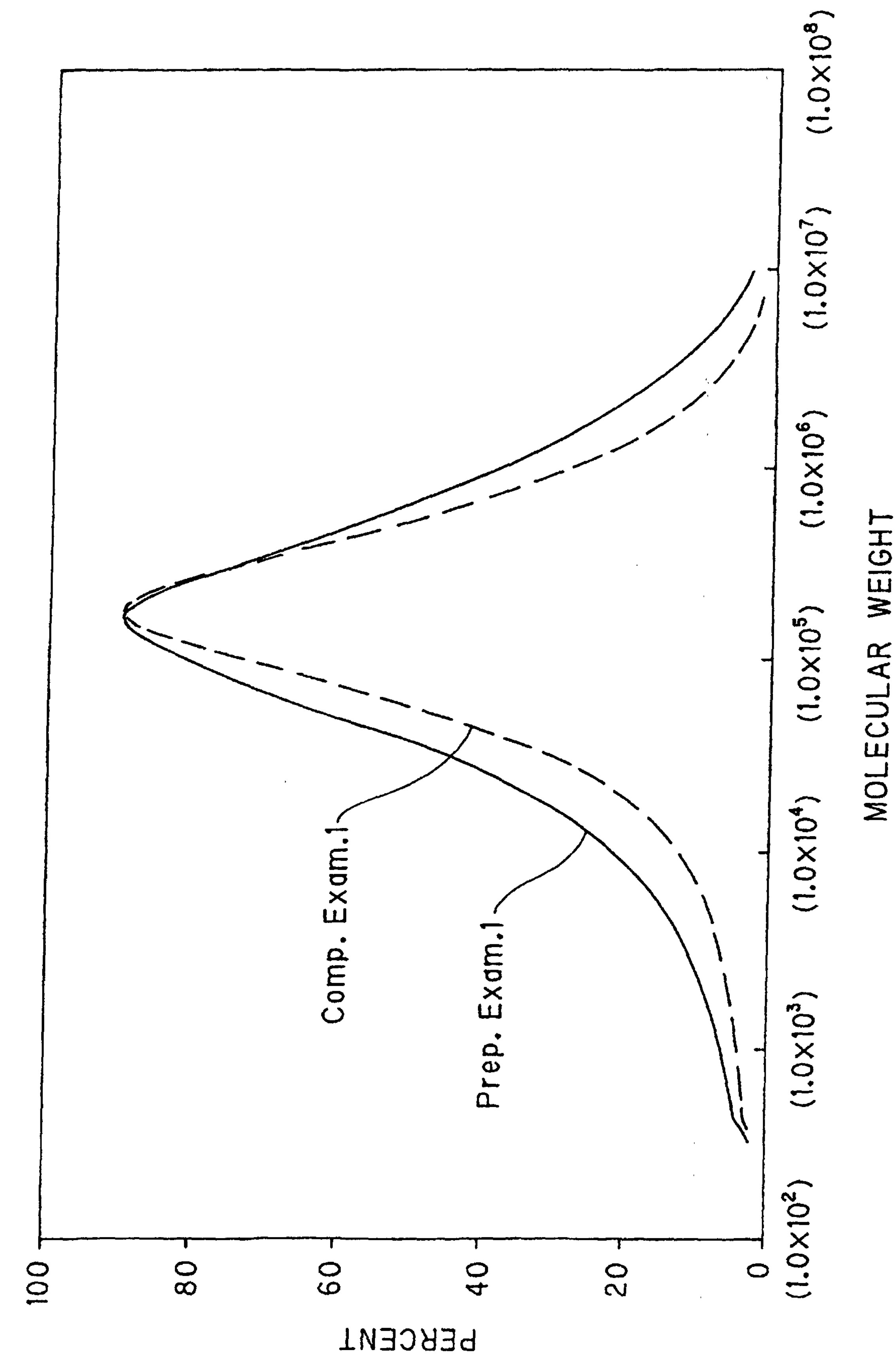
PERCENT
100
80
60
40
20
0
MOLECULAR WEIGHT
(1.0X10²)
(1.0X10³)
(1.0X10⁴)
(1.0X10⁵)
(1.0X10⁶)
(1.0X10⁷)
(1.0X10⁸)
Comp. Exam.1
Prep. Exam.1

FIGURE 1

FIGURE 2

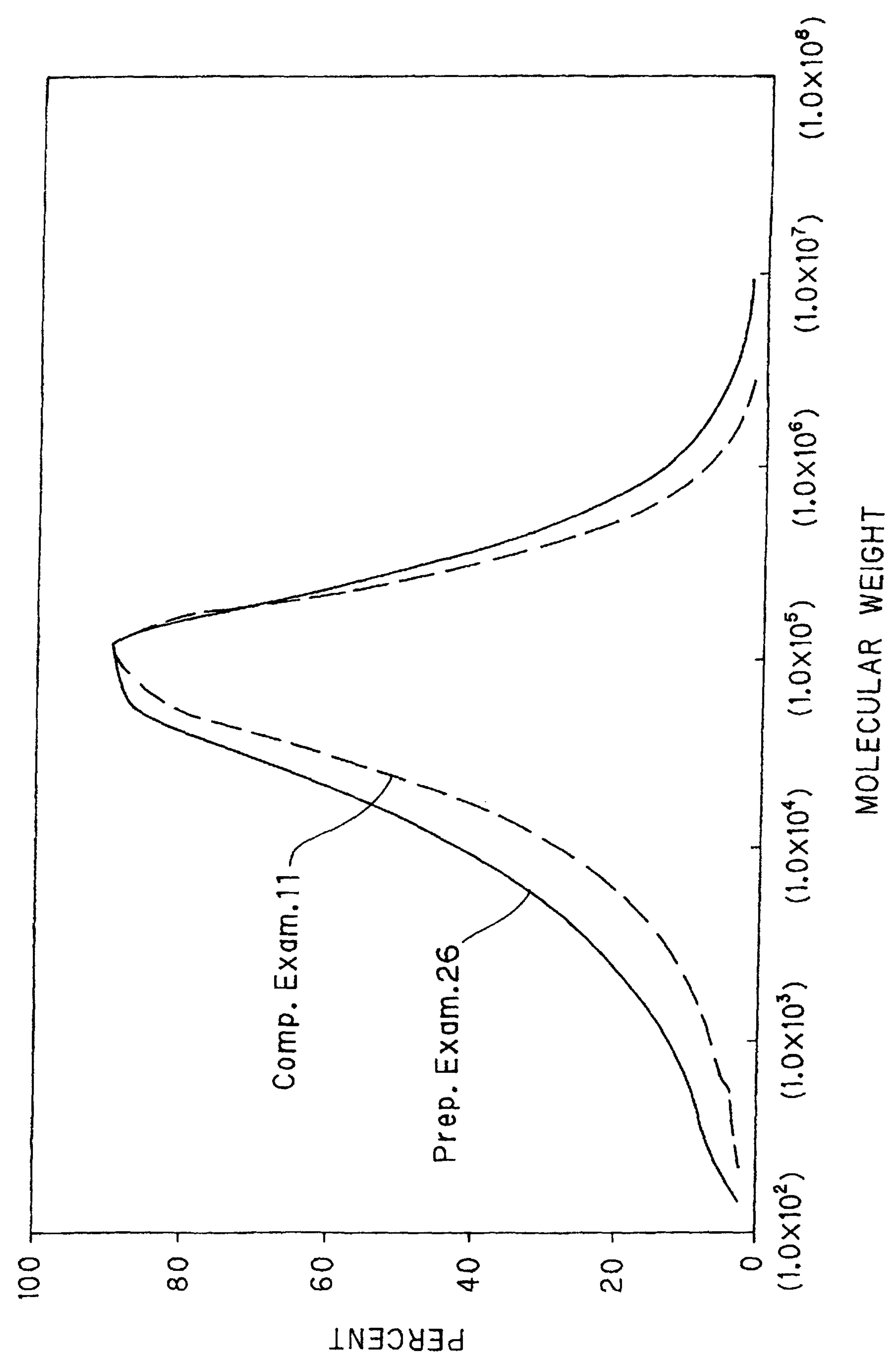
PERCENT
100
80
60
40
20
0
MOLECULAR WEIGHT
(1.0x10²)
(1.0x10³)
(1.0x10⁴)
(1.0x10⁵)
(1.0x10⁶)
(1.0x10⁷)
(1.0x10⁸)
Comp. Exam.11
Prep. Exam.26